# EUROPEAN PATENT APPLICATION

(11) **EP 4 707 660 A1**
(43) Date of publication of application: **11.03.2026**
(21) Application number: 25198882.0
(22) Date of filing: 28.08.2025
(51) Int. Cl.: F17C 11/00

(54) **SYSTEM FILLED WITH HYDROGEN ABSORBING ALLOY**

(30) Priority: 30.08.2024 JP 2024148378
(71) Applicant: Yanmar Holdings Co., Ltd., Osaka-shi, Osaka (JP)
(72) Inventor: MATSURA, Takashi, Osaka (JP); SUGIMOTO, Toshiki, Osaka (JP); AZUMA, Hiroshi, Osaka (JP); FUJII, Yasuyoshi, Osaka (JP)
(74) Representative: Sekiguchi, Kazuya

(57) **Abstract**

[Problem] To provide a system filled with hydrogen absorbing alloy, which is capable of stably transferring hydrogen from a hydrogen supply side tank to a hydrogen absorption side tank.

[Solution] The system filled with hydrogen absorbing alloy 1 comprises a supply side medium circuit 2 comprising a hydrogen supply side tank 21, an absorption side medium circuit 3 comprising a hydrogen absorption side tank 31, and a hydrogen transfer pathway 4 connecting the hydrogen supply side tank 21 and the hydrogen absorption side tank 31. The absorption side medium circuit 3 comprises a cooler 36 for further cooling the medium. The cooling load of the cooler 36 is controlled such that the heating load for the hydrogen supply side tank 21 and the cooling load for the hydrogen absorption side tank 31 are in a predetermined ratio.

## Description

### TECHNICAL FIELD

The present invention relates to a system filled with hydrogen absorbing alloy. In particular, the present invention relates to an improvement for stably transferring hydrogen from a hydrogen supply side tank to a hydrogen absorption side tank.

### BACKGROUND ART

Conventionally, for example, as disclosed in Patent Documents 1 to 4, a technique for transferring hydrogen (hydrogen gas) from a hydrogen supply side tank to a hydrogen absorption side tank has been known.

Specifically, Patent Document 1 discloses that, when filling a hydrogen absorbing alloy-containing tank (hydrogen absorption side tank) with hydrogen from a hydrogen gas cylinder (hydrogen supply side tank), the hydrogen absorbing alloy in the hydrogen absorbing alloy-containing tank is cooled to reduce pressure in the tank, thereby making it easy for the hydrogen absorbing alloy to adsorb hydrogen.

Also, Patent Document 2 discloses that, when hydrogen is transferred from a hydrogen supply tank (hydrogen supply side tank) toward a hydrogen storage tank (hydrogen absorption side tank), a hydrogen absorbing alloy in the hydrogen supply tank is heated and a hydrogen absorbing alloy in the hydrogen storage tank is cooled.

Patent Documents 3 and 4 disclose that, when a hydrogen tank (hydrogen absorption side tank) mounted on a vehicle is to be filled with hydrogen, a hydrogen absorbing alloy contained in the hydrogen tank is cooled by using a heat medium in a car air conditioner.

### PRIOR ART DOCUMENT

### PATENT DOCUMENT

Patent Document 1: Japanese Patent No. 6951737
Patent Document 2: Japanese Patent Publication No. 2000-128502
Patent Document 3: Japanese Patent No. 4542414
Patent Document 4: Japanese Patent Publication No. 2001-239847

### SUMMARY OF INVENTION

### TECHNICAL PROBLEM

The pressure of hydrogen in a tank containing a hydrogen absorbing alloy depends on the temperature in the tank. Therefore, when transferring hydrogen from a hydrogen supply side tank (for example, a hydrogen tank mounted on a hydrogen-filled vehicle) to a hydrogen absorption side tank (for example, a hydrogen tank mounted on a construction machine or the like), it is effective to increase the pressure difference between the tanks in order to ensure a large amount of hydrogen transport per unit time. Therefore, it is necessary to increase the temperature difference between these tanks.

However, when hydrogen is transferred by a predetermined transfer amount simply by increasing the temperature difference between the tanks, the internal pressure of the hydrogen supply side tank may become too high, or conversely, the internal pressure of the hydrogen absorption side tank may become too low. When the internal pressure of the hydrogen supply side tank becomes too high, the internal pressure of the hydrogen supply side tank may exceed a design value. On the other hand, when the internal pressure of the hydrogen absorption side tank becomes too low, the internal pressure of the hydrogen absorption side tank becomes equal to or less than the atmospheric pressure, and the atmosphere may be mixed into the tank. That is, there is a problem that hydrogen cannot be stably transferred from the hydrogen supply side tank to the hydrogen absorption side tank due to the imbalance between the heating load against the hydrogen supply side tank and the cooling load against the hydrogen absorption side tank.

The above described Patent Documents merely disclose the technical idea of transferring hydrogen by simply utilizing heat, and do not consider the above described problem caused by the heat imbalance.

The present invention has been made in view of such a problem, and so, an object of the present invention is to provide a system filled with hydrogen absorbing alloy capable of stably transferring hydrogen from a hydrogen supply side tank to a hydrogen absorption side tank.

### SOLUTION TO PROBLEM

Means for solving the above described object of the present invention is based on a system filled with hydrogen absorbing alloy in which a hydrogen supply side tank containing a hydrogen absorbing alloy and a hydrogen absorption side tank containing a hydrogen absorbing alloy are connected to each other via a hydrogen transfer pathway, and in which hydrogen is transferred from the hydrogen supply side tank to the hydrogen absorption side tank. Also, the system filled with hydrogen absorbing alloy is characterized in that, it comprises a heating device that heats the hydrogen supply side tank and a cooling device that cools the hydrogen absorption side tank, and that, it is configured to be enable to control at least one of the heating load and the cooling load so that the heating load by the heating device and the cooling load by the cooling device are in a predetermined ratio.

With this specific matter, the heating load against the hydrogen supply side tank by the heating device (the heating load corresponding to the endothermic reaction due to the release of hydrogen from the hydrogen absorbing alloy) and the cooling load against the hydrogen absorption side tank by the cooling device (the cooling load corresponding to the exothermic reaction due to the storage of hydrogen in the hydrogen absorbing alloy) are in a predetermined ratio (for example, a ratio of 1:1), and thus the internal pressure of the hydrogen supply side tank can be prevented from becoming too high or conversely the internal pressure of the hydrogen absorption side tank can be prevented from becoming too low, and hydrogen can be stably transferred from the hydrogen supply side tank to the hydrogen absorption side tank.

Specifically, a sub-heater/cooler that increases or decreases the heating load in the heating device and/or increases or decreases the cooling load in the cooling device is included.

Thus, a means for increasing or decreasing the heating load in the heating device and a means for increasing or decreasing the cooling load in the cooling device can be embodied.

Also, the heating device may be configured to include a primary heat medium pathway that heats the hydrogen supply side tank with a primary heat medium, a secondary heat medium pathway through which a secondary heat medium that gives heat to the primary heat medium flows, and a first heat exchanger in which the primary heat medium and the secondary heat medium exchange heat with each other.

Similarly, the cooling device may be configured to include a primary refrigerant pathway that cools the hydrogen absorption side tank with a primary refrigerant, a secondary refrigerant pathway through which a secondary refrigerant that takes heat from the primary refrigerant flows, and a second heat exchanger in which the primary refrigerant and the secondary refrigerant exchange heat with each other.

According to these configurations, the flexibility of the type of fluid (heat medium, refrigerant) flowing through the primary heat medium path and the primary refrigerant path can be increased. That is, it is possible to employ a fluid that does not adversely affect the tank containing the hydrogen absorbing alloy (the hydrogen supply side tank and the hydrogen absorption side tank).

The heating device may be configured in that, it comprises a primary heat medium pathway that heats the hydrogen supply side tank with a primary heat medium, a secondary heat medium pathway through which a secondary heat medium that gives heat to the primary heat medium flows, and a first heat exchanger in which the primary heat medium and the secondary heat medium exchange heat, and in that, the sub-heater/cooler may be provided in the primary heat medium pathway and/or the secondary heat medium pathway.

Similarly, the cooling device may be configured in that, it comprises a primary refrigerant pathway that cools the hydrogen absorption side tank with a primary refrigerant, a secondary refrigerant pathway through which a secondary refrigerant that takes heat from the primary refrigerant flows, and a second heat exchanger in which the primary refrigerant and the secondary refrigerant exchange heat with each other, and in that, the sub-heater/cooler may be provided in the primary refrigerant pathway and/or the secondary refrigerant pathway.

According to these configurations, a configuration in a case where the sub-heater/cooler is used in a system comprising the secondary heat medium pathway and the secondary refrigerant pathway can be embodied.

The hydrogen transfer pathway is provided with a flow rate adjusting valve.

This makes it possible to transfer a constant amount of hydrogen from the hydrogen supply side tank to the hydrogen absorption side tank by adjusting the opening degree of the flow rate adjusting valve in a normal time. Also, when the internal pressure of the hydrogen supply side tank becomes too high or the internal pressure of the hydrogen absorption side tank becomes too low, the internal pressure of each tank can be maintained within a predetermined range by increasing the opening degree of the flow rate adjusting valve.

Also, the heating device and the cooling device are composed of a heat pump unit.

By using the heat pump, the condenser can be used as a heating source and the evaporator can be used as a cooling source, and thereby, a large pressure difference between both the tanks can be obtained with small energy, so that hydrogen can be transferred at a high transfer rate.

Also, by controlling the amount of medium circulation in the heat pump unit, the difference between the temperature of the hydrogen supply side tank and the temperature of the hydrogen absorption side tank is controlled to be a predetermined temperature difference.

Thus, hydrogen can be stably transferred from the hydrogen supply side tank to the hydrogen absorption side tank.

Also, it comprises a sub-heater/cooler that increases or decreases an heating load for the hydrogen supply side tank, and/or increases or decreases a cooling load for the hydrogen absorption side tank.

Thus, the sub-heater/cooler can be used to avoid a high pressure rise on the hydrogen supply side tank side due to the heat imbalance, or the sub-heater/cooler can be used to avoid a low pressure drop on the hydrogen absorption side tank side due to the heat imbalance.

Also, when the pressure of the medium in the heat pump unit becomes higher than a predetermined value, the heating load of the sub-heater/cooler is decreased or the cooling load of the sub-heater/cooler is increased.

Thus, the sub-heater/cooler can be used to avoid a high pressure rise on the hydrogen supply side tank side due to a heat imbalance.

Also, when the pressure of the medium of the heat pump unit becomes lower than a predetermined value, the heating load of the sub-heater/cooler is increased or the cooling load of the sub-heater/cooler is decreased.

Thus, the sub-heater/cooler can be used to avoid a low pressure drop on the hydrogen absorption side tank side due to a heat imbalance.

Also, when the pressure of hydrogen in the hydrogen transfer pathway becomes higher than a predetermined value, the heating load of the sub-heater/cooler is decreased or the cooling load of the sub-heater/cooler is increased.

Thus, when the pressure on the hydrogen supply side tank side in the hydrogen transfer pathway is high, a pressure rise on the hydrogen supply side tank side can be suppressed by using the sub-heater/cooler to lower the ability to heat the hydrogen supply side tank.

Also, when the pressure of hydrogen in the hydrogen transfer pathway becomes lower than a predetermined value, the heating load by the sub-heater/cooler is increased or the cooling load by the sub-heater/cooler is decreased.

Thus, when the pressure on the hydrogen absorption side tank side in the hydrogen transfer pathway is low, the sub-heater/cooler is used to lower the ability to cool the hydrogen absorption side tank, so that a pressure drop on the hydrogen absorption side tank side can be suppressed.

The hydrogen transfer pathway is provided with a flow rate adjusting valve, and when the pressure of hydrogen in the hydrogen transfer pathway becomes higher than a first hydrogen pressure threshold value, or becomes lower than a second hydrogen pressure threshold value that is lower than the first hydrogen pressure threshold value, the opening degree of the flow rate adjusting valve is increased.

Thus, when the pressure on the hydrogen supply side tank side in the hydrogen transfer pathway is high (when the pressure becomes higher than the first hydrogen pressure threshold value), a pressure rise on the hydrogen supply side tank side can be suppressed, and when the pressure on the hydrogen absorption side tank side in the hydrogen transfer pathway is low (when the pressure becomes lower than the second hydrogen pressure threshold value), a pressure drop on the hydrogen absorption side tank side can be suppressed.

Also, when the pressure of the medium in the heat pump unit becomes higher than a first medium pressure threshold value, or becomes lower than a second medium pressure threshold value that is lower than the first medium pressure threshold value, the circulation amount of the medium in the heat pump unit is decreased.

Thus, when the pressure of the medium of the heat pump unit is high (when the pressure becomes higher than the first medium pressure threshold value), the circulation amount of the medium is decreased, so that the heating load for the hydrogen supply side tank is decreased, and the pressure rise on the hydrogen supply side tank side can be suppressed. Also, when the pressure of the medium of the heat pump unit is low (lower than the second medium pressure threshold value), the circulation amount of the medium is decreased, so that the cooling load for the hydrogen absorption side tank is decreased, and the pressure drop on the hydrogen absorption side tank side can be suppressed.

### ADVANTAGEOUS EFFECTS OF INVENTION

In the present invention, in the system filled with hydrogen absorbing alloy in which the hydrogen supply side tank and the hydrogen absorption side tank are connected to each other via the hydrogen transfer pathway, the heating load by the heating device that heats the hydrogen supply side tank and the cooling load by the cooling device that cools the hydrogen absorption side tank can be controlled in a predetermined ratio. Thus, the internal pressure of the hydrogen supply side tank can be prevented from becoming too high, or the internal pressure of the hydrogen absorption side tank can be prevented from becoming too low, and hydrogen can be stably transferred from the hydrogen supply side tank to the hydrogen absorption side tank.

### BRIEF DESCRIPTION OF DRAWINGS

FIG. 1 is a diagram illustrating an outline of a circuit configuration of a system filled with hydrogen absorbing alloy according to the first embodiment.
FIG. 2 is a diagram illustrating an outline of a circuit configuration of a system filled with hydrogen absorbing alloy according to the second embodiment.
FIG. 3 is a diagram illustrating an outline of a circuit configuration of a system filled with hydrogen absorbing alloy according to the third embodiment.
FIG. 4 is a diagram schematically illustrating a circuit configuration of a system filled with hydrogen absorbing alloy according to a modification example of the third embodiment.
FIG. 5 is a diagram illustrating an outline of a circuit configuration of a system filled with hydrogen absorbing alloy according to the fourth embodiment.
FIG. 6 is a diagram illustrating an outline of a circuit configuration of a system filled with hydrogen absorbing alloy according to a modification example of the fourth embodiment.
FIG. 7 is a diagram illustrating an outline of a circuit configuration of a system filled with hydrogen absorbing alloy according to the fifth embodiment.
FIG. 8 is a diagram illustrating an outline of a circuit configuration of a system filled with hydrogen absorbing alloy according to the sixth embodiment.
FIG. 9 is a diagram illustrating an outline of a circuit configuration of a system filled with hydrogen absorbing alloy according to the seventh embodiment.
FIG. 10 is a diagram illustrating an outline of a circuit configuration of a system filled with hydrogen absorbing alloy according to a modification example of the seventh embodiment.
FIG. 11 is a diagram illustrating an outline of a circuit configuration of a system filled with hydrogen absorbing alloy according to the eighth embodiment.
FIG. 12 is a diagram illustrating an outline of a circuit configuration of a system filled with hydrogen absorbing alloy according to a modification example of the eighth embodiment.
FIG. 13 is a diagram illustrating an example of changes of the internal pressure of a hydrogen supply side tank, the internal pressure of a hydrogen absorption side tank, the flow rate of hydrogen in a hydrogen transfer pathway, and the opening degree of a flow rate adjusting valve in the ninth embodiment.
FIG. 14 is a diagram illustrating an example of changes of the internal pressure of a hydrogen supply side tank, the internal pressure of a hydrogen absorption side tank, the flow rate of hydrogen in a hydrogen transfer pathway, and the opening degree of a flow rate adjusting valve in the tenth embodiment.
FIG. 15 is a diagram illustrating an outline of a circuit configuration of a system filled with hydrogen absorbing alloy according to the eleventh embodiment and illustrating an example of a flow of a medium.
FIG. 16 is a diagram illustrating an outline of a circuit configuration of a system filled with hydrogen absorbing alloy according to the eleventh embodiment and illustrating another example of a flow of a medium.
FIG. 17 is a diagram illustrating a relationship between an opening degree of a three way valve and a temperature change of a hydrogen supply side tank corresponding to the opening degree in the eleventh embodiment.
FIG. 18 is a diagram illustrating an outline of a circuit configuration of a system filled with hydrogen absorbing alloy according to the twelfth embodiment and illustrating an example of a flow of a medium.
FIG. 19 is a diagram illustrating an outline of a circuit configuration of a system filled with hydrogen absorbing alloy according to the twelfth embodiment and illustrating another example of a flow of a medium.
FIG. 20 is a diagram illustrating a relationship between an opening degree of a three way valve and a temperature change of a hydrogen supply side tank corresponding to the opening degree in the twelfth embodiment.
FIG. 21 is a diagram illustrating a relationship between a tank pressure and an amount of absorbed hydrogen in each case where a different type of alloy is used.
FIG. 22 is a diagram illustrating a relationship between a tank pressure and an amount of absorbed hydrogen in each case where the same alloy is used.
FIG. 23 is a diagram illustrating a relationship between a tank pressure and an amount of absorbed hydrogen in each case where a heat pump unit is used.
FIG. 24 is a diagram illustrating an outline of a circuit configuration of a system filled with hydrogen absorbing alloy according to the thirteenth embodiment.
FIG. 25 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, a heat radiation amount of a main-condenser, and a heat radiation amount of a sub-condenser in the fourteenth embodiment.
FIG. 26 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, a heat radiation amount of a main-condenser, and a heat radiation amount of a sub-condenser in the fifteenth embodiment.
FIG. 27 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, an amount of heat absorption of a main-evaporator, and an amount of heat absorption of a sub-evaporator in the sixteenth embodiment.
FIG. 28 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, an amount of heat absorbed by a main-evaporator, and an amount of heat absorbed by a sub-evaporator in the seventeenth embodiment.
FIG. 29 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, an amount of hydrogen absorbed by the hydrogen absorption side tank, and an amount of hydrogen supplied by the hydrogen supply side tank in the eighteenth embodiment.
FIG. 30 is a diagram illustrating an example of change of a high pressure of a heat pump unit, a low pressure of the heat pump unit, an opening degree of a solenoid valve, an internal pressure of a hydrogen supply side tank, an internal pressure of a hydrogen absorption side tank, a flow rate of hydrogen in a hydrogen transfer pathway, an opening degree of a flow rate adjusting valve, an amount of hydrogen absorbed by the hydrogen absorption side tank, and an amount of hydrogen supplied by the hydrogen supply side tank in the nineteenth embodiment.

### DESCRIPTION OF EMBODIMENTS

Embodiments for carrying out the present invention will be described below with reference to the accompanying drawings. In the present embodiment, a case where the present invention is applied to a system filled with hydrogen absorbing alloy that transfers hydrogen from a hydrogen supply side tank mounted on a hydrogen-filled vehicle (a truck or the like) to a hydrogen absorption side tank mounted on a construction machine will be described.

### - First embodiment -

At first, descriptions will be made on the first embodiment according to the present invention. The present embodiment is an embodiment related to a countermeasure in a case where the heating load for the hydrogen supply side tank in the supply side medium circuit comprising the hydrogen supply side tank is larger than the cooling load for the hydrogen absorption side tank in the absorption side medium circuit comprising the hydrogen absorption side tank (larger as an absolute value of the heat amount).

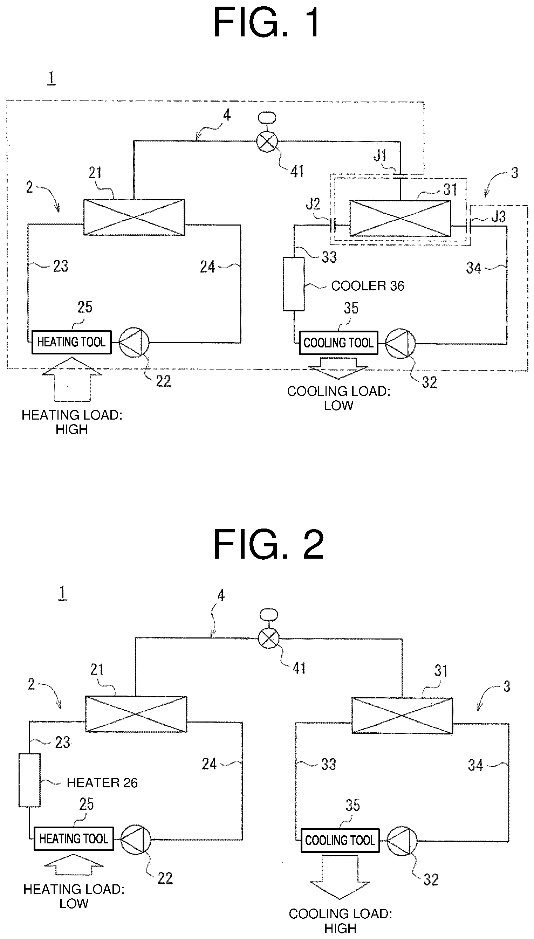

FIG. 1 is a diagram illustrating an outline of a circuit configuration of a system filled with hydrogen absorbing alloy 1 according to the present embodiment. As illustrated in FIG. 1, the system filled with hydrogen absorbing alloy 1 according to the present embodiment comprises a supply side medium circuit 2 comprising a hydrogen supply side tank 21, an absorption side medium circuit 3 comprising a hydrogen absorption side tank 31, and a hydrogen transfer pathway 4 that connects the hydrogen supply side tank 21 and the hydrogen absorption side tank 31.

The supply side medium circuit 2 comprises a pump 22 and a hydrogen supply side tank 21, and the discharge side of the pump 22 and the medium inflow side of the hydrogen supply side tank 21 are connected by a supply side first pipe 23. The suction side of the pump 22 and the medium outflow side of the hydrogen supply side tank 21 are connected by a supply side second pipe 24.

The supply side first pipe 23 is provided with a heating tool 25 for heating the medium flowing through the supply side first pipe 23. As this heating tool 25, an electric heater, a heat exchanger of a chiller, a condenser of a heat pump unit (an embodiment in which the heat pump unit is used will be described below), or the like is applicable. The medium flowing through the supply side first pipe 23 may be heated by other means. Thus, the supply side medium circuit 2 constitutes the heating device in the present invention.

The hydrogen supply side tank 21 has a configuration in which a hydrogen absorbing alloy is contained in a casing, and in which the hydrogen absorbing alloy is heated by heat exchange between the medium flowing into the casing from the supply side first pipe 23 and the hydrogen absorbing alloy.

The absorption side medium circuit 3 comprises a pump 32 and a hydrogen absorption side tank 31, and the discharge side of the pump 32 and the medium inflow side of the hydrogen absorption side tank 31 are connected by an absorption side first pipe 33. Also, the suction side of the pump 32 and the medium outflow side of the hydrogen absorption side tank 31 are connected by an absorption side second pipe 34.

Also, the absorption side first pipe 33 is provided with a cooling tool 35 for cooling the medium flowing through the absorption side first pipe 33. As this cooling tool 35, a heat exchanger of a chiller, a Peltier element, an evaporator of a heat pump unit (an embodiment in which the heat pump unit is used will be described below), or the like is applicable. Also, the medium flowing through the absorption side first pipe 33 may be cooled by other means. Thus, the absorption side medium circuit 3 constitutes the cooling device in the present invention.

The hydrogen absorption side tank 31 has a configuration in which a hydrogen absorbing alloy is contained in a casing, and in which the hydrogen absorbing alloy is cooled by heat exchange between the medium flowing into the casing from the absorption side first pipe 33 and the hydrogen absorbing alloy.

The hydrogen transfer pathway 4 is composed of a pipe that connects the hydrogen supply side tank 21 and the hydrogen absorption side tank 31, and enables transfer of hydrogen from the hydrogen supply side tank 21 toward the hydrogen absorption side tank 31. Also, this hydrogen transfer pathway 4 is provided with a flow rate adjusting valve 41 having a function of maintaining the flow rate of hydrogen in the hydrogen transfer pathway 4 constant. This flow rate adjusting valve 41 is subjected to so called mass flow control in which the flow rate of hydrogen in the hydrogen transfer pathway 4 is kept constant regardless of the pressure difference between the internal pressure of the hydrogen supply side tank 21 and the internal pressure of the hydrogen absorption side tank 31.

As described above, the present embodiment is the system filled with hydrogen absorbing alloy 1 that transfers hydrogen from the hydrogen supply side tank 21 mounted on the hydrogen-filled vehicle to the hydrogen absorption side tank 31 mounted on the construction machine, and among the respective devices constituting the present system filled with hydrogen absorbing alloy 1, the supply side medium circuit 2, the respective devices other than the hydrogen absorption side tank 31 in the absorption side medium circuit 3, and the flow rate adjusting valve 41 of the hydrogen transfer pathway 4 are mounted on the hydrogen-filled vehicle, and only the hydrogen absorption side tank 31 is mounted on the construction machine. In FIG. 1, the respective devices mounted on the hydrogen-filled vehicle are surrounded by a one dot chain line, and the devices mounted on the construction machine are surrounded by a two dot chain line. Then, when hydrogen is transferred from the hydrogen supply side tank 21 to the hydrogen absorption side tank 31, the pipe of the hydrogen-filled vehicle and the pipe of the construction machine are connected by the joint parts J1, J2, and J3. In the drawings of the following embodiments, the one dot chain line, the two dot chain line, and the joint parts J1, J2, and J3 are not illustrated for easy understanding of the drawings.

As a feature of the present embodiment, a cooler (referred to as a sub-heater/cooler in the present invention) 36 for further cooling the medium flowing through the absorption side first pipe 33 is provided on the downstream side of the cooling tool 35 in the absorption side first pipe 33. This cooler 36 is not particularly limited as long as it cools the medium flowing through the absorption side first pipe 33, and similarly to the cooling tool 35, a heat exchanger of a chiller, a Peltier element, an evaporator of a heat pump unit, or the like is applicable. In this cooler 36, cooling load for the medium flowing through the absorption side first pipe 33 is variable. Specifically, in a situation where the cooling load of the medium in the cooling tool 35 included in the absorption side medium circuit 3 is insufficient with respect to the heating load of the medium in the heating tool 25 included in the supply side medium circuit 2 (a situation where a heat imbalance occurs), the insufficient cooling load is covered by the cooling load by the cooler 36, thereby suppressing or eliminating the heat imbalance. For example, when the temperature of the medium on the medium inflow side of the hydrogen supply side tank 21 in the supply side first pipe 23 (hereinafter referred to as a supply side target temperature) and the temperature of the medium on the medium inflow side of the hydrogen absorption side tank 31 in the absorption side first pipe 33 (hereinafter referred to as an absorption side target temperature) for obtaining the ideal internal pressures of the respective tanks 21 and 31 for stably transferring hydrogen in the hydrogen transfer pathway 4 are defined in advance, the cooling load of the cooler 36 is controlled so that the heat imbalance is suppressed or eliminated in accordance with the amount of deviation between the actual temperature of the medium on the medium inflow side of the hydrogen supply side tank 21 (for example, the temperature of the medium detected by a temperature sensor not illustrated) and the supply side target temperature and the amount of deviation between the actual temperature of the medium on the medium inflow side of the hydrogen absorption side tank 31 (for example, the temperature of the medium detected by a temperature sensor not illustrated) and the absorption side target temperature.

Thus, the internal pressure of the hydrogen supply side tank 21 can be prevented from becoming too high (for example, exceeding the pressure specified by the High Pressure Gas Safety Act), and hydrogen can be stably transferred from the hydrogen supply side tank 21 to the hydrogen absorption side tank 31.

### - Second embodiment -

At next, descriptions will be made on the second embodiment according to the present invention. The present embodiment is an embodiment related to a countermeasure in a case where the cooling load for the hydrogen absorption side tank 31 in the absorption side medium circuit 3 is larger than the heating load for the hydrogen supply side tank 21 in the supply side medium circuit 2 (larger as an absolute value of the amount of heat).

FIG. 2 is a diagram illustrating an outline of a circuit configuration of the system filled with hydrogen absorbing alloy 1 according to the present embodiment. As illustrated in this FIG. 2, the system filled with hydrogen absorbing alloy 1 according to the present embodiment also comprises, similarly to the above described first embodiment, the supply side medium circuit 2 comprising the hydrogen supply side tank 21, the absorption side medium circuit 3 comprising the hydrogen absorption side tank 31, and the hydrogen transfer pathway 4 that connects the hydrogen supply side tank 21 and the hydrogen absorption side tank 31.

In the present embodiment, no cooler is provided on the downstream side of the cooling tool 35 in the absorption side first pipe 33, and a heater (referred to as a sub-heater/cooler in the present invention) 26 for further heating the medium flowing through the supply side first pipe 23 is provided on the downstream side of the heating tool 25 in the supply side first pipe 23. This heater 26 is not particularly limited as long as it heats the medium flowing through the supply side first pipe 23, and similarly to the heating tool 25, an electric heater, a heat exchanger of a chiller, a condenser of a heat pump unit, or the like is applicable. Also, this heater 26 has a variable heating load for the medium flowing through the supply side first pipe 23. Specifically, in a situation where the heating load for the medium in the heating tool 25 included in the supply side medium circuit 2 is insufficient with respect to the cooling load for the medium in the cooling tool 35 included in the absorption side medium circuit 3 (a situation where a heat imbalance occurs), the insufficient heating load is covered by the heating load by the heater 26, thereby suppressing or eliminating the heat imbalance. For example, when the supply side target temperature and the absorption side target temperature for obtaining the ideal internal pressure of each of the tanks 21 and 31 for stably transferring hydrogen in the hydrogen transfer pathway 4 are specified in advance, the heating load of the heater 26 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, it is possible to prevent the internal pressure of the hydrogen absorption side tank 31 from becoming too low (for example, a state where the internal pressure is lower than the hydrogen pressure required by the device connected to the hydrogen absorption side tank 31), and it is possible to stably transfer hydrogen from the hydrogen supply side tank 21 to the hydrogen absorption side tank 31.

### - Third embodiment -

At next, descriptions will be made on the third embodiment according to the present invention. Similarly to the first embodiment, the present embodiment is an embodiment related to a countermeasure in a case where the heating load for the hydrogen supply side tank 21 in the supply side medium circuit 2 is larger than the cooling load for the hydrogen absorption side tank 31 in the absorption side medium circuit 3 (larger as an absolute value of the amount of heat).

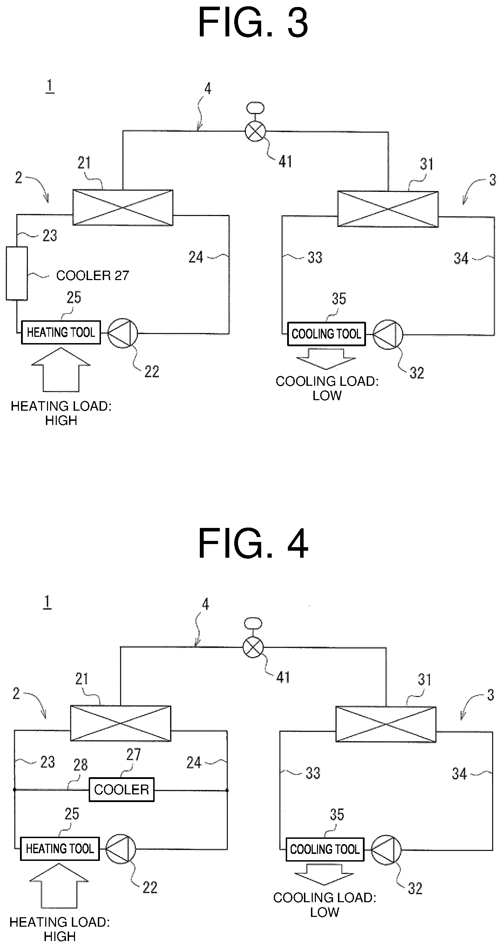

FIG. 3 is a diagram illustrating an outline of a circuit configuration of the system filled with hydrogen absorbing alloy 1 according to the present embodiment. As illustrated in this FIG. 3, the system filled with hydrogen absorbing alloy 1 according to the present embodiment also comprises the supply side medium circuit 2 comprising the hydrogen supply side tank 21, the absorption side medium circuit 3 comprising the hydrogen absorption side tank 31, and the hydrogen transfer pathway 4 that connects the hydrogen supply side tank 21 and the hydrogen absorption side tank 31, as in the above described first embodiment.

In the present embodiment, no cooler is provided on the downstream side of the cooling tool 35 in the absorption side first pipe 33, and a cooler (referred to as a sub-heater/cooler in the present invention) 27 for cooling the medium flowing through the supply side first pipe 23 is provided on the downstream side of the heating tool 25 in the supply side first pipe 23. This cooler 27 is not particularly limited as long as it cools the medium flowing through the supply side first pipe 23, and similarly to the cooling tool 35, a heat exchanger of a chiller, a Peltier element, an evaporator of a heat pump unit, or the like is applicable. Also this cooler 27 has a variable cooling load for the medium flowing through the supply side first pipe 23. Specifically, in a situation where the heating load of the medium in the heating tool 25 included in the supply side medium circuit 2 is excessive with respect to the cooling load of the medium in the cooling tool 35 included in the absorption side medium circuit 3 (a situation where a heat imbalance occurs), the excessive heating load is canceled out by the cooler 27 to suppress or eliminate the heat imbalance. For example, when the supply side target temperature and the absorption side target temperature for obtaining the ideal internal pressure of each of the tanks 21 and 31 for stably transferring hydrogen in the hydrogen transfer pathway 4 are specified in advance, the cooling load of the cooler 27 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen supply side tank 21 can be prevented from becoming too high, and hydrogen can be stably transferred from the hydrogen supply side tank 21 to the hydrogen absorption side tank 31.

### - Modification example of the third embodiment -

In the above described third embodiment, the cooler 27 is connected in series to the hydrogen supply side tank 21, while they may be connected in parallel. FIG. 4 is a diagram illustrating an outline of a circuit configuration of the system filled with hydrogen absorbing alloy 1 in a case where the cooler 27 is connected in parallel to the hydrogen supply side tank 21.

As illustrated in this FIG. 4, a branch pipe 28 extending between the supply side first pipe 23 and the supply side second pipe 24 is provided, and the cooler 27 is provided in the branch pipe 28.

When the cooler 27 is connected in parallel to the hydrogen supply side tank 21 as described above, the cooling load of the cooler 27 may be controlled such that the heat imbalance is suppressed or eliminated, or the cooling load of the cooler 27 may be constant and the amount of the medium flowing through the branch pipe 28 may be adjusted (for example, by providing a flow rate adjusting valve in a branch part) such that the cooling load of the entire medium in the supply side medium circuit 2 is adjusted to suppress or eliminate the heat imbalance.

When the heating load of the hydrogen supply side tank 21 in the supply side medium circuit 2 is larger than the cooling load of the hydrogen absorption side tank 31 in the absorption side medium circuit 3, if the configuration in which the absorption side medium circuit 3 comprises a cooler, connecting the cooler in parallel with the hydrogen absorption side tank 31 is also included in the technique of the present invention.

### - Fourth embodiment -

At next, descriptions will be made on the fourth embodiment according to the present invention. Similarly to the second embodiment, the present embodiment is an embodiment related to a countermeasure in a case where the cooling load for the hydrogen absorption side tank 31 in the absorption side medium circuit 3 is larger than the heating load for the hydrogen supply side tank 21 in the supply side medium circuit 2 (larger as an absolute value of the amount of heat).

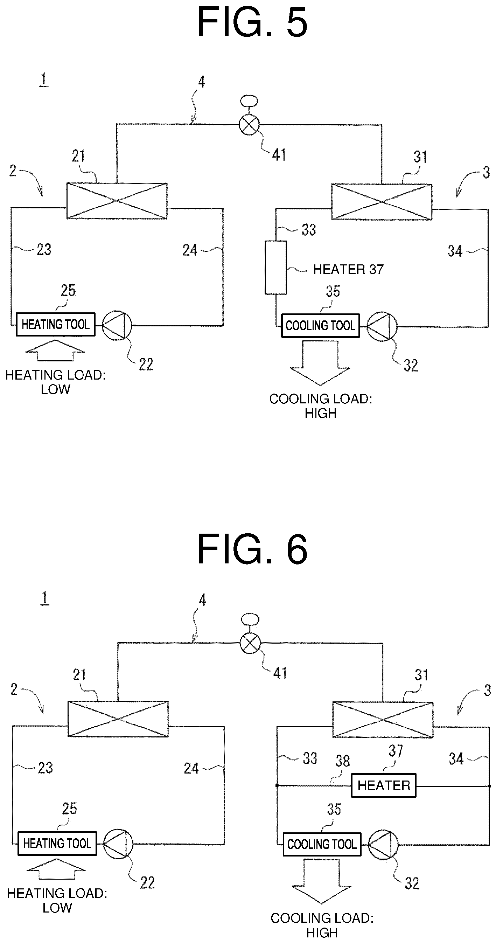

FIG. 5 is a diagram illustrating an outline of a circuit configuration of the system filled with hydrogen absorbing alloy 1 according to the present embodiment. As illustrated in this FIG. 5, the system filled with hydrogen absorbing alloy 1 according to the present embodiment also comprises the supply side medium circuit 2 comprising the hydrogen supply side tank 21, the absorption side medium circuit 3 comprising the hydrogen absorption side tank 31, and the hydrogen transfer pathway 4 connecting the hydrogen supply side tank 21 and the hydrogen absorption side tank 31, as in the above described second embodiment.

In the present embodiment, no heater is provided on the downstream side of the heating tool 25 in the supply side first pipe 23, and a heater (referred to as a sub-heater/cooler in the present invention) 37 for heating the medium flowing through the absorption side first pipe 33 is provided on the downstream side of the cooling tool 35 in the absorption side first pipe 33. This heater 37 is not particularly limited as long as it heats the medium flowing through the absorption side first pipe 33, and similarly to the heating tool 25, an electric heater, a heat exchanger of a chiller, a condenser of a heat pump unit, or the like is applicable. Also, this heater 37 has a variable heating load for the medium flowing through the absorption side first pipe 33. Specifically, in a situation where the cooling load of the medium in the cooling tool 35 included in the absorption side medium circuit 3 is excessive with respect to the heating load of the medium in the heating tool 25 included in the supply side medium circuit 2 (a situation where a heat imbalance occurs), the excessive cooling load is canceled out by the heater 37, thereby suppressing or eliminating the heat imbalance. For example, when the supply side target temperature and the absorption side target temperature for obtaining the ideal internal pressures of the respective tanks 21 and 31 for stably transferring hydrogen in the hydrogen transfer pathway 4 are specified in advance, the heating load of the heater 37 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen absorption side tank 31 can be prevented from becoming too low, and hydrogen can be stably transferred from the hydrogen supply side tank 21 to the hydrogen absorption side tank 31.

### - Modification example of the fourth embodiment -

In the above described fourth embodiment, the heater 37 is connected in series to the hydrogen absorption side tank 31, while they may be connected in parallel. FIG. 6 is a diagram illustrating an outline of a circuit configuration of the system filled with hydrogen absorbing alloy 1 in a case where the heater 37 is connected in parallel to the hydrogen absorption side tank 31.

As illustrated in this FIG. 6, the branch pipe 38 extending between the absorption side first pipe 33 and the absorption side second pipe 34 is provided, and the heater 37 is provided in the branch pipe 38.

When the heater 37 is connected in parallel to the hydrogen absorption side tank 31 as described above, the heating load of the heater 37 may be controlled such that the heat imbalance is suppressed or eliminated, or the heating load of the heater 37 may be constant and the amount of the medium flowing through the branch pipe 38 is adjusted (for example, by providing a flow rate adjusting valve in the branch part) such that the heating load for the entire medium in the absorption side medium circuit 3 is adjusted to suppress or eliminate the heat imbalance.

When the cooling load of the hydrogen absorption side tank 31 in the absorption side medium circuit 3 is larger than the heating load of the hydrogen supply side tank 21 in the supply side medium circuit 2, in a configuration in which the supply side medium circuit 2 comprises a heater, connecting the heater in parallel with the hydrogen supply side tank 21 is also included in the technique of the present invention.

### - Fifth embodiment -

At next, descriptions will be made on the fifth embodiment according to the present invention. The present embodiment suppresses or eliminates the heat imbalance in a configuration comprising a secondary circuit in which a medium circulates as a means for heating the medium circulating in the supply side medium circuit 2 and a means for cooling the medium circulating in the absorption side medium circuit 3.

Similarly to the first embodiment, the present embodiment is an embodiment related to a countermeasure in a case where the heating load for the hydrogen supply side tank 21 in the supply side medium circuit 2 is larger than the cooling load for the hydrogen absorption side tank 31 in the absorption side medium circuit 3 (larger as an absolute value of the amount of heat).

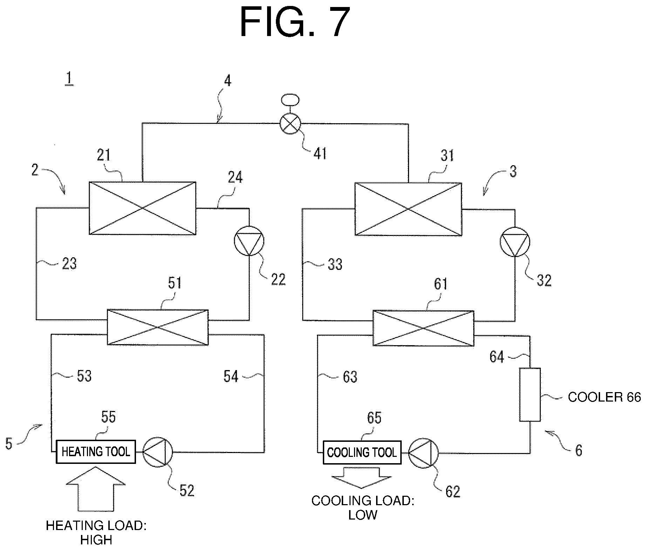

FIG. 7 is a diagram illustrating an outline of a circuit configuration of the system filled with hydrogen absorbing alloy 1 according to the present embodiment. As illustrated in this FIG. 7, the system filled with hydrogen absorbing alloy 1 according to the present embodiment comprises a supply side secondary medium circuit (referred to as a secondary heat medium path through which a secondary heat medium flows in the present invention) 5 and an absorption side secondary medium circuit (referred to as a secondary refrigerant path through which a secondary refrigerant flows in the present invention) 6 in addition to a supply side medium circuit (referred to as a primary heat medium path through which a primary heat medium flows in the present invention) 2, an absorption side medium circuit (referred to as a primary refrigerant path through which a primary refrigerant flows in the present invention) 3, and a hydrogen transfer pathway 4.

The supply side medium circuit 2 in the present embodiment comprises, in the supply side first pipe 23, a supply side heat exchanger (referred to as a first heat exchanger in the present invention) 51 that exchanges heat between the medium (primary heat medium) circulating in the supply side medium circuit 2 and the medium (secondary heat medium) circulating in the supply side secondary medium circuit 5.

The supply side secondary medium circuit 5 comprises a pump 52 and the supply side heat exchanger 51, and the discharge side of the pump 52 and the supply side heat exchanger 51 are connected by a supply side third pipe 53. The suction side of the pump 52 and the supply side heat exchanger 51 are connected by a supply side fourth pipe 54. The heating tool 55 for heating the medium flowing through the supply side third pipe 53 is provided in the supply side third pipe 53. As this heating tool 55, similarly to the above described embodiment, an electric heater, a heat exchanger of a chiller, a condenser of a heat pump unit, or the like is applicable.

The medium flowing through the supply side third pipe 53 may be heated by other means. With such a configuration, the heating device in the present invention is configured by the supply side medium circuit 2 and the supply side secondary medium circuit 5.

On the other hand, the absorption side medium circuit 3 in the present embodiment comprises, in the absorption side first pipe 33, an absorption side heat exchanger (referred to as a second heat exchanger in the present invention) 61 that exchanges heat between the medium (primary refrigerant) circulating in the absorption side medium circuit 3 and the medium (secondary refrigerant) circulating in the absorption side secondary medium circuit 6.

The absorption side secondary medium circuit 6 comprises a pump 62 and the absorption side heat exchanger 61, and the discharge side of the pump 62 and the absorption side heat exchanger 61 are connected by an absorption side third pipe 63. Also, the suction side of the pump 62 and the absorption side heat exchanger 61 are connected by an absorption side fourth pipe 64. The absorption side third pipe 63 is provided with a cooler 65 for cooling the medium flowing through the absorption side third pipe 63. As this cooler 65, a heat exchanger of a chiller, a Peltier element, an evaporator of a heat pump unit, or the like is applicable, as in the above described embodiment. The medium flowing through the absorption side third pipe 63 may be cooled by other means. With such a configuration, the absorption side medium circuit 3 and the absorption side secondary medium circuit 6 constitute the cooling device according to the present invention.

As a feature of the present embodiment, the absorption side fourth pipe 64 is provided with a cooler 66 for further cooling the medium flowing through the absorption side fourth pipe 64. This cooler 66 is also not particularly limited as long as it cools the medium flowing through the absorption side fourth pipe 64, and a heat exchanger of a chiller, a Peltier element, an evaporator of a heat pump unit, or the like is applicable as in the cooler 65. Also this cooler 66 has a variable cooling load for the medium flowing through the absorption side fourth pipe 64. Specifically, in a situation where the cooling load of the medium in the cooler 65 included in the absorption side secondary medium circuit 6 is insufficient with respect to the heating load of the medium in the heating tool 55 included in the supply side secondary medium circuit 5 (a situation where a heat imbalance occurs), the insufficient cooling load is covered by the cooling load by the cooler 66, thereby suppressing or eliminating the heat imbalance. For example, when the supply side target temperature and the absorption side target temperature for obtaining the ideal internal pressure of each of the tanks 21 and 31 for stably transferring hydrogen in the hydrogen transfer pathway 4 are specified in advance, the cooling load of the cooler 66 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen supply side tank 21 can be prevented from becoming too high, and hydrogen can be stably transferred from the hydrogen supply side tank 21 to the hydrogen absorption side tank 31.

### - Sixth embodiment -

At next, descriptions will be made on the sixth embodiment according to the present invention. The present embodiment is an embodiment related to a countermeasure in a case where the cooling load for the hydrogen absorption side tank 31 in the absorption side medium circuit 3 is larger than the heating load for the hydrogen supply side tank 21 in the supply side medium circuit 2 (larger as an absolute value of the amount of heat) in the system filled with hydrogen absorbing alloy 1 comprising the supply side secondary medium circuit 5 and the absorption side secondary medium circuit 6.

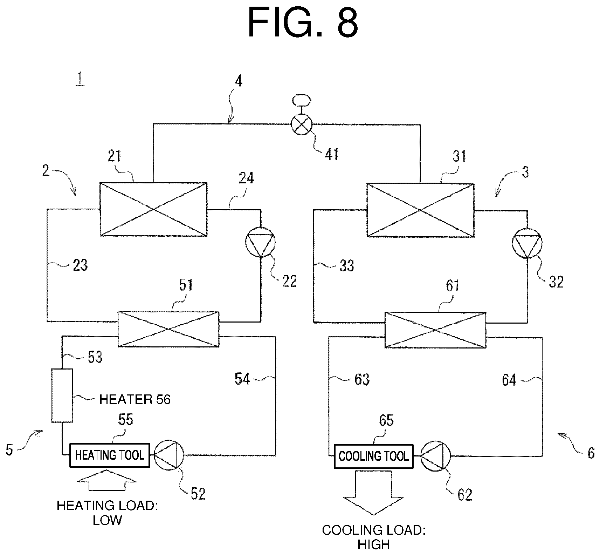

FIG. 8 is a diagram illustrating an outline of a circuit configuration of the system filled with hydrogen absorbing alloy 1 according to the present embodiment. As illustrated in this FIG. 8, the system filled with hydrogen absorbing alloy 1 according to the present embodiment also comprises a supply side secondary medium circuit 5 and an absorption side secondary medium circuit 6 in addition to the supply side medium circuit 2, the absorption side medium circuit 3, and the hydrogen transfer pathway 4, as in the above described fifth embodiment.

In the present embodiment, no cooler is provided in the absorption side fourth pipe 64, and a heater 56 for further heating the medium flowing through the supply side third pipe 53 is provided on the downstream side of the heating tool 55 in the supply side third pipe 53. This heater 56 is also not particularly limited as long as it heats the medium flowing through the supply side third pipe 53, and an electric heater, a heat exchanger of a chiller, a condenser of a heat pump unit, or the like is applicable as in the heating tool 55. Also this heater 56 has a variable heating load for the medium flowing through the supply side third pipe 53. Specifically, in a situation where the heating load for the medium in the heating tool 55 included in the supply side secondary medium circuit 5 is insufficient with respect to the cooling load for the medium in the cooler 65 included in the absorption side secondary medium circuit 6 (a situation where a heat imbalance occurs), the insufficient heating load is covered by the heating load by the heater 56, thereby suppressing or eliminating the heat imbalance. For example, when the supply side target temperature and the absorption side target temperature for obtaining the ideal internal pressure of each of the tanks 21 and 31 for stably transferring hydrogen in the hydrogen transfer pathway 4 are specified in advance, the heating load of the heater 56 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen absorption side tank 31 can be prevented from becoming too low, and hydrogen can be stably transferred from the hydrogen supply side tank 21 to the hydrogen absorption side tank 31.

### - Seventh embodiment -

At next, descriptions will be made on the seventh embodiment according to the present invention. Similarly to the fifth embodiment, the present embodiment is an embodiment related to a countermeasure in a case where, in the system filled with hydrogen absorbing alloy 1 comprising the supply side secondary medium circuit 5 and the absorption side secondary medium circuit 6, the heating load for the hydrogen supply side tank 21 in the supply side medium circuit 2 is larger than the cooling load for the hydrogen absorption side tank 31 in the absorption side medium circuit 3 (larger as an absolute value of the amount of heat).

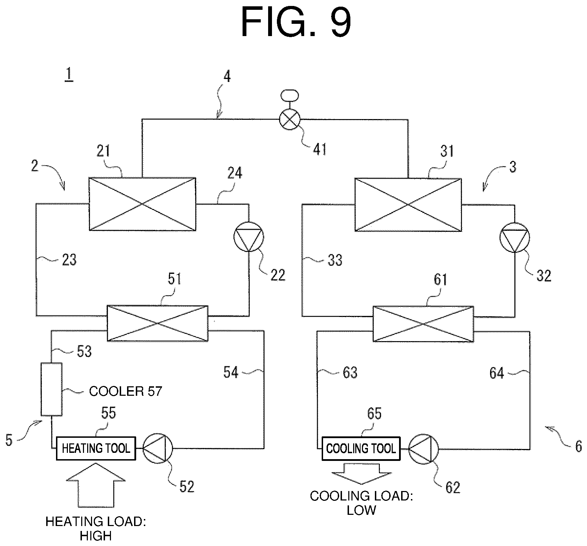

FIG. 9 is a diagram illustrating an outline of a circuit configuration of the system filled with hydrogen absorbing alloy 1 according to the present embodiment. As illustrated in this FIG. 9, the system filled with hydrogen absorbing alloy 1 according to the present embodiment also comprises the supply side secondary medium circuit 5 and the absorption side secondary medium circuit 6 in addition to the supply side medium circuit 2, the absorption side medium circuit 3, and the hydrogen transfer pathway 4, as in the above described fifth embodiment.

**In** the present embodiment, no cooler is provided in the absorption side fourth pipe 64, and a cooler 57 for cooling the medium flowing through the supply side third pipe 53 is provided on the downstream side of the heating tool 55 in the supply side third pipe 53. This cooler 57 is not particularly limited as long as it cools the medium flowing through the supply side third pipe 53, and similarly to the cooler 65, a heat exchanger of a chiller, a Peltier element, an evaporator of a heat pump unit, or the like is applicable. Also this cooler 57 has a variable cooling load for the medium flowing through the supply side third pipe 53. Specifically, in a situation where the heating load for the medium in the heating tool 55 provided in the supply side third pipe 53 is excessive with respect to the cooling load for the medium in the cooler 65 provided in the absorption side third pipe 63 (a situation where a heat imbalance occurs), the excessive heating load is canceled out by the cooler 57 to suppress or eliminate the heat imbalance. For example, when the supply side target temperature and the absorption side target temperature for obtaining the ideal internal pressure of each of the tanks 21 and 31 for stably transferring hydrogen in the hydrogen transfer pathway 4 are specified in advance, the cooling load of the cooler 57 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen supply side tank 21 can be prevented from becoming too high, and hydrogen can be stably transferred from the hydrogen supply side tank 21 to the hydrogen absorption side tank 31.

### - Modification example of the seventh embodiment -

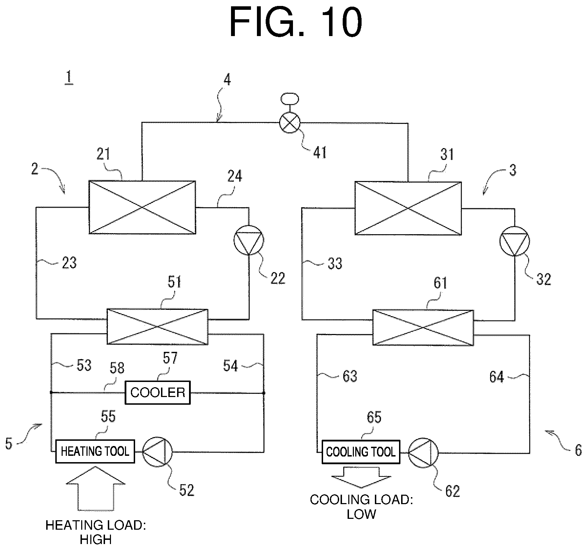

Although the cooler 57 is connected in series to the supply side heat exchanger 51 in the above described seventh embodiment, the cooler 57 may be connected in parallel. FIG. 10 is a diagram illustrating an outline of a circuit configuration of the system filled with hydrogen absorbing alloy 1 in a case where the cooler 57 is connected in parallel to the supply side heat exchanger 51.

As illustrated in this FIG. 10, the branch pipe 58 extending between the supply side third pipe 53 and the supply side fourth pipe 54 is provided, and the cooler 57 is provided in the branch pipe 58.

When the cooler 57 is connected in parallel to the supply side heat exchanger 51 in this manner, the cooling load by the cooler 57 may be controlled such that the heat imbalance is suppressed or eliminated, or the cooling load by the cooler 57 may be constant and the cooling load of the entire medium in the supply side secondary medium circuit 5 may be adjusted by adjusting the amount of the medium flowing through the branch pipe 58, thereby suppressing or eliminating the heat imbalance.

When the heating load for the hydrogen supply side tank 21 in the supply side medium circuit 2 is larger than the cooling load for the hydrogen absorption side tank 31 in the absorption side medium circuit 3, in a configuration in which the absorption side secondary medium circuit 6 comprises a cooler, connecting the cooler in parallel to the absorption side heat exchanger 61 is also included in the technique of the present invention.

### - Eighth embodiment -

At next, descriptions will be made on the eighth embodiment according to the present invention. The present embodiment is an embodiment related to a countermeasure in a case where the cooling load for the hydrogen absorption side tank 31 in the absorption side medium circuit 3 is larger than the heating load for the hydrogen supply side tank 21 in the supply side medium circuit 2 (larger as an absolute value of the amount of heat) in the system filled with hydrogen absorbing alloy 1 comprising the supply side secondary medium circuit 5 and the absorption side secondary medium circuit 6, as in the sixth embodiment.

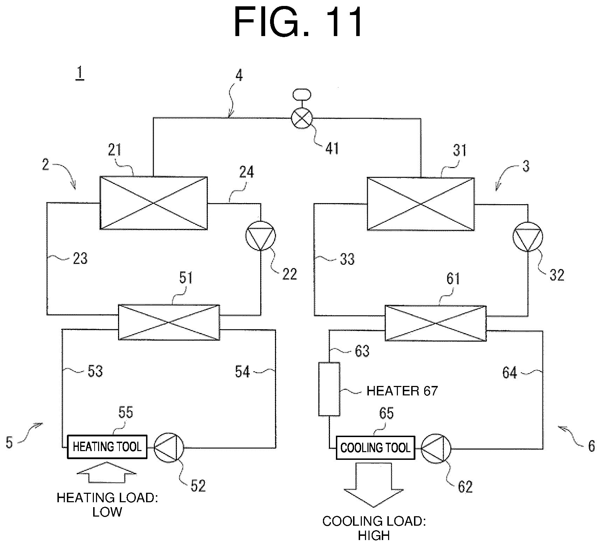

FIG. 11 is a diagram illustrating an outline of a circuit configuration of the system filled with hydrogen absorbing alloy 1 according to the present embodiment. As illustrated in this FIG. 11, the system filled with hydrogen absorbing alloy 1 according to the present embodiment also comprises the supply side secondary medium circuit 5 and the absorption side secondary medium circuit 6 in addition to the supply side medium circuit 2, the absorption side medium circuit 3, and the hydrogen transfer pathway 4, as in the above described sixth embodiment.

In the present embodiment, no heater is provided on the downstream side of the heating tool 55 in the supply side third pipe 53, and a heater 67 for heating the medium flowing through the absorption side third pipe 63 is provided on the downstream side of the cooler 65 in the absorption side third pipe 63. This heater 67 is not particularly limited as long as it heats the medium flowing through the absorption side third pipe 63, and similarly to the heating tool 55, an electric heater, a heat exchanger of a chiller, a condenser of a heat pump unit, or the like is applicable. Also this heater 67 has a variable heating load for the medium flowing through the absorption side third pipe 63. Specifically, in a situation where the cooling load of the medium in the cooler 65 included in the absorption side third pipe 63 is excessive with respect to the heating load of the medium in the heating tool 55 included in the supply side third pipe 53 (a situation where a heat imbalance occurs), the excessive cooling load is canceled out by the heater 67, thereby suppressing or eliminating the heat imbalance. For example, when the supply side target temperature and the absorption side target temperature for obtaining the ideal internal pressures of the respective tanks 21 and 31 for stably transferring hydrogen in the hydrogen transfer pathway 4 are specified in advance, the heating load of the heater 67 is controlled such that the heat imbalance is suppressed or eliminated in accordance with the amount of deviation between the actual temperature of the medium on the medium inflow side of the hydrogen supply side tank 21 and the supply side target temperature and the amount of deviation between the actual temperature of the medium on the medium inflow side of the hydrogen absorption side tank 31 and the absorption side target temperature.

Thus, the internal pressure of the hydrogen absorption side tank 31 can be prevented from becoming too low, and hydrogen can be stably transferred from the hydrogen supply side tank 21 to the hydrogen absorption side tank 31.

### - Modification example of the eighth embodiment -

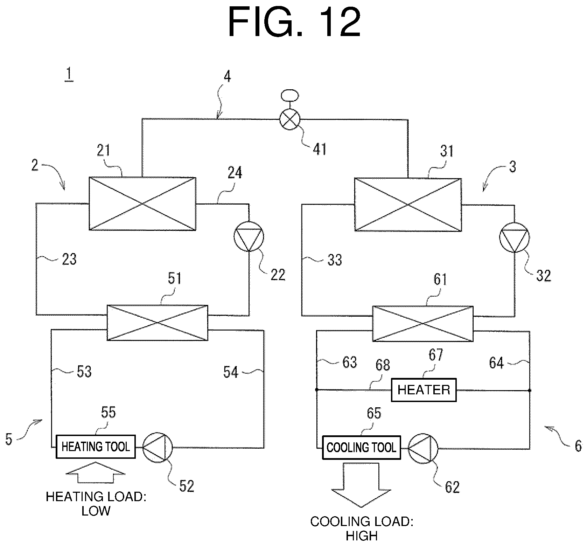

Although the heater 67 is connected in series to the absorption side heat exchanger 61 in the above described eighth embodiment, the heater 67 may be connected in parallel. FIG. 12 is a diagram illustrating an outline of a circuit configuration of the system filled with hydrogen absorbing alloy 1 in a case where the heater 67 is connected in parallel to the absorption side heat exchanger 61.

As illustrated in this FIG. 12, the branch pipe 68 extending between the absorption side third pipe 63 and the absorption side fourth pipe 64 is provided, and the heater 67 is provided in the branch pipe 68.

When the heater 67 is connected in parallel to the absorption side heat exchanger 61 as described above, the heating load of the heater 67 may be controlled such that the heat imbalance is suppressed or eliminated, or the heating load of the heater 67 may be constant and the amount of the medium flowing through the branch pipe 68 may be adjusted to adjust the heating load of the entire medium in the absorption side secondary medium circuit 6, thereby suppressing or eliminating the heat imbalance.

When the cooling load of the hydrogen absorption side tank 31 in the absorption side medium circuit 3 is larger than the heating load of the hydrogen supply side tank 21 in the supply side medium circuit 2, in a configuration in which a heater is provided in the supply side secondary medium circuit 5, connecting the heater in parallel to the supply side heat exchanger 51 is also included in the technique of the present invention also.

### - Ninth embodiment -

At next, descriptions will be made on the ninth embodiment according to the present invention. The present embodiment relates to control for eliminating a state where the internal pressure of the hydrogen supply side tank 21 becomes too high due to the heating load of the hydrogen supply side tank 21 in the supply side medium circuit 2 being larger than the cooling load of the hydrogen absorption side tank 31 in the absorption side medium circuit 3.

Specifically, in this embodiment, when the internal pressure of the hydrogen supply side tank 21 reaches a predetermined high pressure limit value, control of increasing the opening degree of the flow rate adjusting valve 41 is performed. That is, by canceling the function of maintaining the hydrogen flow rate constant by the flow rate adjusting valve 41, and by temporarily increasing the opening degree of the flow rate adjusting valve 41, the pressure of the hydrogen supply side tank 21 is released from the hydrogen transfer pathway 4 to the hydrogen absorption side tank 31, and the internal pressure of the hydrogen supply side tank 21 is decreased to the high pressure limit value or less. The control of the opening degree of this flow rate adjusting valve 41 is performed by transmitting a command signal from a valve controller on the condition that the pressure detected by a pressure sensor (not illustrated) provided on the upstream side of the flow rate adjusting valve 41 in the hydrogen transfer pathway 4 reaches a high pressure limit value.

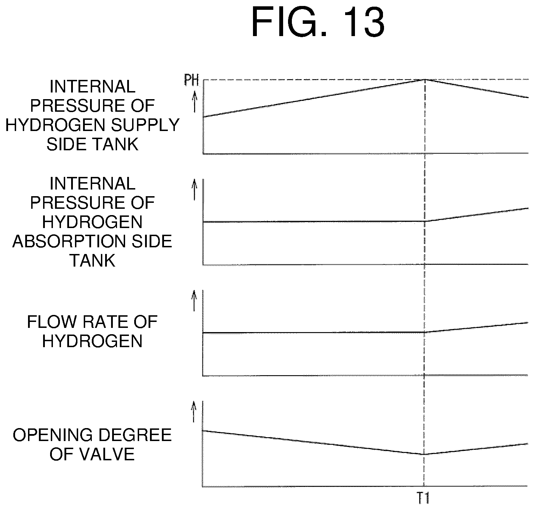

FIG. 13 is a diagram illustrating an example of changes in the internal pressure of the hydrogen supply side tank 21, the internal pressure of the hydrogen absorption side tank 31, the flow rate of hydrogen in the hydrogen transfer pathway 4, and the opening degree of the flow rate adjusting valve 41 in this case.

Until the timing T1 in the drawing is reached, the internal pressure of the hydrogen supply side tank 21 gradually increases, and accordingly, the opening degree of the flow rate adjusting valve 41 gradually decreases, whereby the flow rate of hydrogen in the hydrogen transfer pathway 4 is maintained constant. Then, at timing T1 in the drawing, when the internal pressure of the hydrogen supply side tank 21 reaches the high pressure limit value PH, the opening degree of the flow rate adjusting valve 41 increases, and thus the flow rate of hydrogen in the hydrogen transfer pathway 4 increases, the internal pressure of the hydrogen supply side tank 21 decreases (becomes lower than the high pressure limit value PH), and the internal pressure of the hydrogen absorption side tank 31 slightly increases.

Thus, by performing the control of increasing the opening degree of the flow rate adjusting valve 41 when the internal pressure of the hydrogen supply side tank 21 reaches the predetermined high pressure limit value, the internal pressure of the hydrogen supply side tank 21 can be prevented from becoming too high.

Such control of the opening degree of the flow rate adjusting valve 41 is applicable to any of the above described embodiments.

### - Tenth embodiment -

At next, descriptions will be made on the tenth embodiment according to the present invention. The present embodiment relates to control for eliminating a state where the internal pressure of the hydrogen absorption side tank 31 becomes too low due to the cooling load of the hydrogen absorption side tank 31 in the absorption side medium circuit 3 being larger than the heating load of the hydrogen supply side tank 21 in the supply side medium circuit 2.

Specifically, in this embodiment, when the internal pressure of the hydrogen absorption side tank 31 reaches a predetermined low pressure limit value, the control of increasing the opening degree of the flow rate adjusting valve 41 is performed. That is, by canceling the function of maintaining the hydrogen flow rate constant by the flow rate adjusting valve 41, and by temporarily increasing the opening degree of the flow rate adjusting valve 41, the flow rate of hydrogen to the hydrogen absorption side tank 31 is increased, thereby increasing the internal pressure of the hydrogen absorption side tank 31 to the low pressure limit value or more. This control of the opening degree of this flow rate adjusting valve 41 is performed by transmitting a command signal from a valve controller (not illustrated) on the condition that the pressure detected by a pressure sensor (not illustrated) provided on the downstream side of the flow rate adjusting valve 41 in the hydrogen transfer pathway 4 reaches a low pressure limit value.

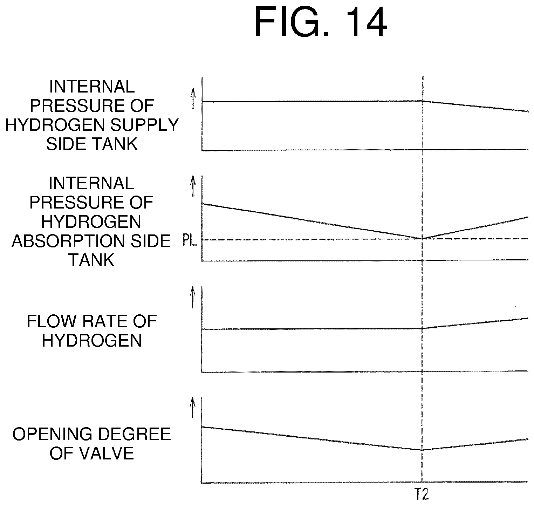

FIG. 14 is a diagram illustrating an example of changes in the internal pressure of the hydrogen supply side tank 21, the internal pressure of the hydrogen absorption side tank 31, the flow rate of hydrogen in the hydrogen transfer pathway 4, and the opening degree of the flow rate adjusting valve 41 in this case.

Until the timing T2 in the drawing is reached, the internal pressure of the hydrogen absorption side tank 31 gradually decreases, and accordingly, the opening degree of the flow rate adjusting valve 41 gradually decreases, whereby the flow rate of hydrogen in the hydrogen transfer pathway 4 is maintained constant. Then, at timing T2 in the drawing, when the internal pressure of the hydrogen absorption side tank 31 reaches the low pressure limit value PL, the opening degree of the flow rate adjusting valve 41 increases, and thus the flow rate of hydrogen in the hydrogen transfer pathway 4 increases, the internal pressure of the hydrogen absorption side tank 31 increases (becomes higher than the low pressure limit value PL), and the internal pressure of the hydrogen supply side tank 21 slightly decreases.

Thus, by performing the control of increasing the opening degree of the flow rate adjusting valve 41 when the internal pressure of the hydrogen absorption side tank 31 reaches the predetermined low pressure limit value PL, the internal pressure of the hydrogen absorption side tank 31 can be prevented from becoming too low.

Such control of the opening degree of the flow rate adjusting valve 41 is applicable to any of the above described embodiments.

### - Eleventh embodiment -

At next, descriptions will be made on the eleventh embodiment according to the present invention. The present embodiment utilizes a heat storage tank, which is an external heat source, as a means for heating the medium flowing through the supply side third pipe 53 of the supply side secondary medium circuit 5. Examples of this heat storage tank include a heat storage tank that uses waste heat of a facility and a heat storage tank that uses cooling water of an internal combustion engine.

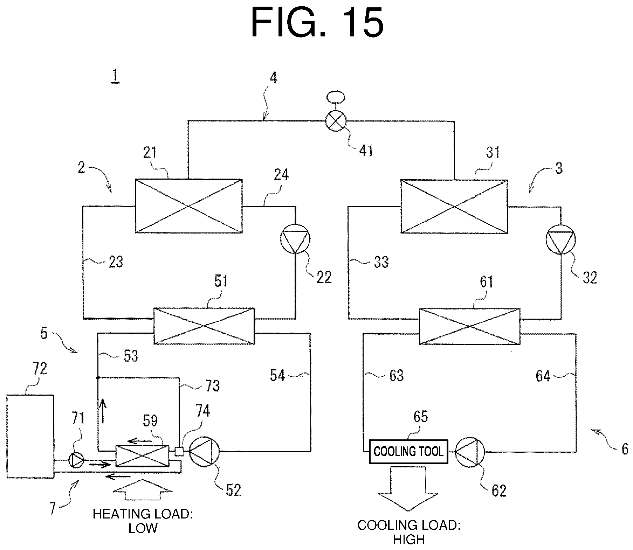

FIG. 15 is a diagram illustrating an outline of a circuit configuration of the system filled with hydrogen absorbing alloy 1 according to the present embodiment. As illustrated in this FIG. 15, the system filled with hydrogen absorbing alloy 1 according to the present embodiment comprises the supply side medium circuit 2, the absorption side medium circuit 3, the hydrogen transfer pathway 4, the supply side secondary medium circuit 5, and the absorption side secondary medium circuit 6, as in the fifth embodiment. The supply side secondary medium circuit 5 comprises the heat exchanger 59 instead of a heating tool. Also, it comprises an external heat source circuit 7 capable of exchanging heat with the medium flowing through this heat exchanger 59, and the external heat source circuit 7 comprises the pump 71 and the heat storage tank 72. The supply side third pipe 53 comprises a bypass circuit 73 that bypasses the heat exchanger 59. Three way valve 74 is provided at a connection position on the discharge side of the pump 52 in this bypass circuit 73, and the flow rate of the medium flowing through the supply side third pipe 53 to the heat exchanger 59 and the flow rate of the medium bypassing the heat exchanger 59 (the flow rate of the bypass circuit 73) are variable by adjusting the opening degree of the three way valve 74.

Then, when the cooling load for the hydrogen absorption side tank 31 in the absorption side medium circuit 3 is larger than the heating load for the hydrogen supply side tank 21 in the supply side medium circuit 2, as indicated by arrows in FIG. 15 (arrows attached to the external heat source circuit 7 and the supply side third pipe 53), the flow rate of the medium to the heat exchanger 59 is increased and the flow rate of the medium bypassing the heat exchanger 59 is decreased (for example, the flow rate is set to zero), thereby heating the medium flowing through the supply side third pipe 53.

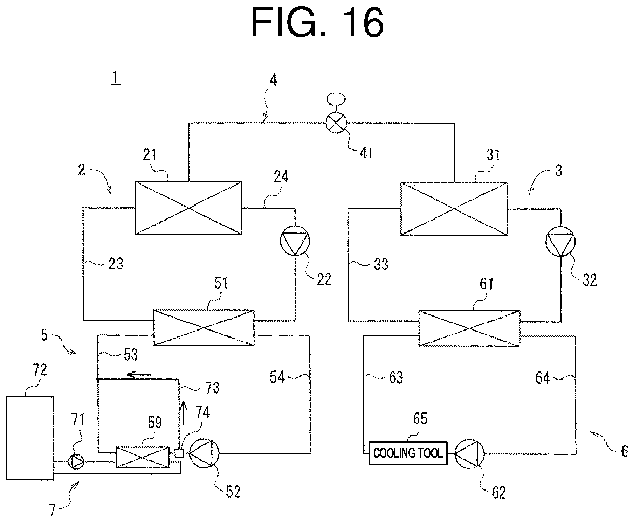

On the other hand, when the heat imbalance is suppressed or eliminated by heating the medium flowing through the supply side third pipe 53, as indicated by arrows (arrows attached to the bypass circuit 73) in FIG. 16, the flow rate of the medium to the heat exchanger 59 is decreased (for example, the flow rate is set to zero), and the flow rate of the medium that bypasses the heat exchanger 59 is increased, thereby maintaining the state where the amounts of heat are balanced. When the cooling load of the hydrogen absorption side tank 31 in the absorption side medium circuit 3 becomes larger than the heating load of the hydrogen supply side tank 21 in the supply side medium circuit 2 again, the state is returned to the state indicated by the arrow in FIG. 15 again.

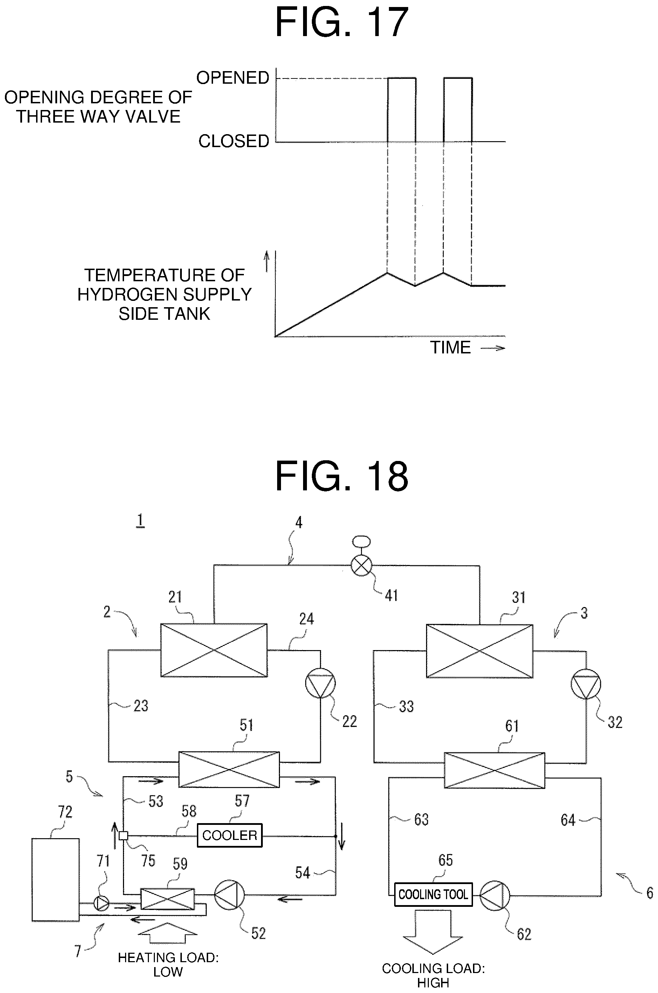

FIG. 17 shows the relationship between the opening degree of the three way valve 74 (the opening degree to the bypass circuit 73) and the temperature change of the hydrogen supply side tank 21 corresponding to the opening degree. As is apparent from this FIG. 17, the temperature of the hydrogen supply side tank 21 can be maintained within a predetermined range by switching the opening degree of the three way valve 74.

As described above, in the present embodiment, it is possible to maintain a state where the amount of heat is balanced while effectively utilizing the heat from the external heat source.

### - Twelfth embodiment -

At next, descriptions will be made on the twelfth embodiment according to the present invention. The present embodiment is a modification example of the above described eleventh embodiment. Differences from the eleventh embodiment will be mainly described.

FIG. 18 is a diagram illustrating an outline of a circuit configuration of the system filled with hydrogen absorbing alloy 1 according to the present embodiment. As illustrated in this FIG. 18, the system filled with hydrogen absorbing alloy 1 according to the present embodiment has a configuration in which a branch pipe 58 extending between the supply side third pipe 53 and the supply side fourth pipe 54 of the supply side secondary medium circuit 5 is provided and a cooler 57 is provided in the branch pipe 58, in addition to the system filled with hydrogen absorbing alloy 1 of the above described eleventh embodiment. Three way valve 75 is provided at a connection position of this branch pipe 58 with the supply side third pipe 53, and the flow rate of the medium flowing through the cooler 57 is variable by adjusting the opening degree of the three way valve 75.

Then, when the cooling load of the hydrogen absorption side tank 31 in the absorption side medium circuit 3 is larger than the heating load of the hydrogen supply side tank 21 in the supply side medium circuit 2, as indicated by arrows in FIG. 18 (arrows attached to the external heat source circuit 7 and the supply side secondary medium circuit 5), the flow rate to the branch pipe 58 is decreased (for example, the flow rate is set to zero), and thus the medium flowing through the supply side third pipe 53 is heated while the cooling load of the medium is decreased.

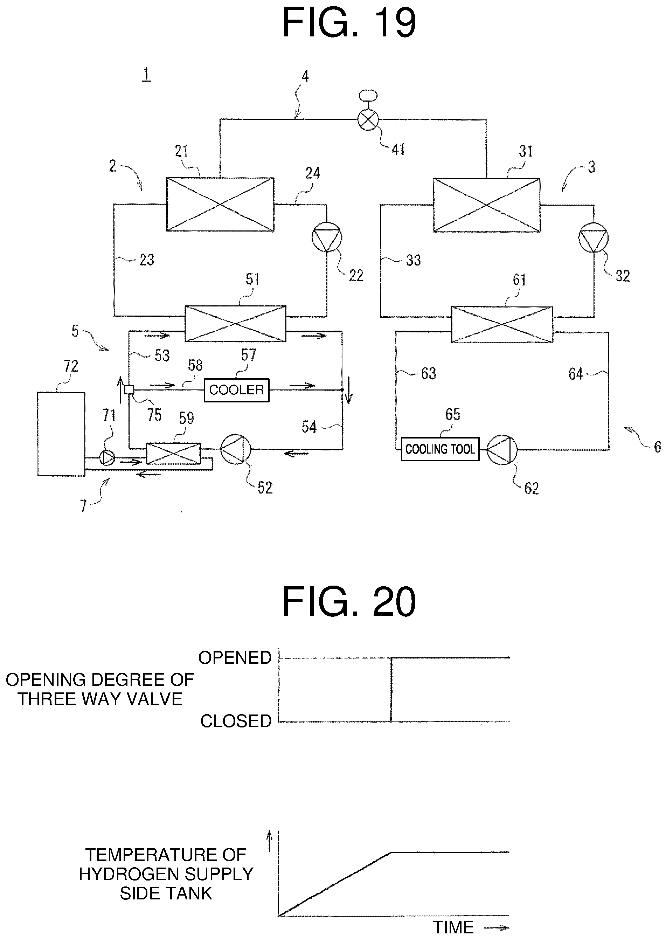

On the other hand, when the heat imbalance is suppressed or eliminated by heating the medium flowing through the supply side third pipe 53, the flow rate to the branch pipe 58 is adjusted as indicated by the arrows in FIG. 19, thereby maintaining the state where the amount of heat is balanced.

By connecting the cooler 57 in parallel to the supply side heat exchanger 51 in this manner, the accuracy of suppressing or eliminating the heat imbalance can be improved.

FIG. 20 shows the relationship between the opening degree of the three way valve 75 (the opening degree to the branch pipe 58) and the temperature change of the hydrogen supply side tank 21 corresponding to the opening degree. As is apparent from this FIG. 20, the temperature of the hydrogen supply side tank 21 can be maintained within a predetermined range by switching the opening degree of the three way valve 75.

As described above, in the present embodiment, when the heat from the external heat source is effectively used, a state where the amount of heat is balanced can be maintained.

### < Embodiments Utilizing Heat Pump Unit >

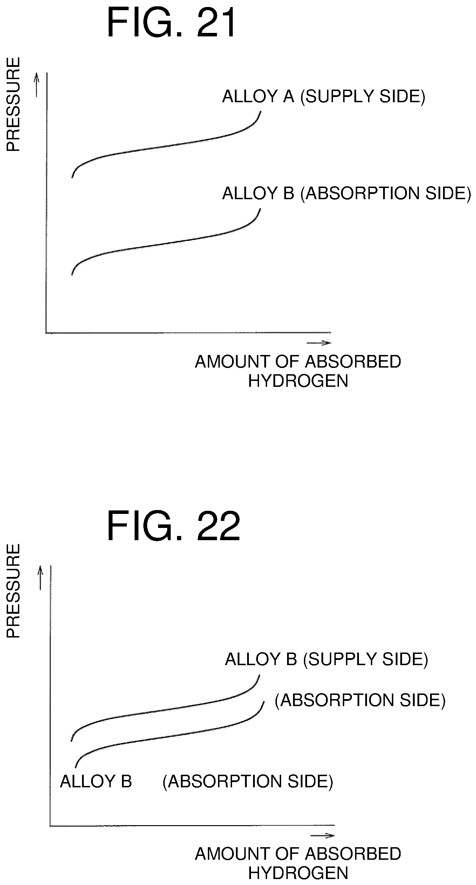

When the temperature of the hydrogen supply side tank 21 and the temperature of the hydrogen absorption side tank 31 are close to each other, the energy required for supply and the energy required for absorption, which are required to transfer a predetermined amount of hydrogen, are equivalent to each other, and thus, only by adopting a circuit in which the hydrogen supply side tank 21 and the hydrogen absorption side tank 31 are connected to each other by a water pump, the energy balance is established by the cascade use of heat, and the energy required for transfer becomes small. When the PCT characteristics of the hydrogen supply side tank 21 and the hydrogen absorption side tank 31 are different from each other (for example, when different types of alloys are used as the hydrogen absorbing alloys), even when the temperature difference between the alloys caused by the cascade use of heat is small, a pressure difference occurs between both the tanks due to the use of the different types of alloys, and thus a relatively high transfer rate can be obtained. FIG. 21 is a view illustrating the relationship between the tank pressure and the amount of stored hydrogen in each of the cases where different types of alloys (alloy A and alloy B) are used. In this case, a high hydrogen transfer rate can be obtained with small energy.

However, when the PCT characteristics of the hydrogen supply side tank 21 and the hydrogen absorption side tank 31 are close to each other (for example, when the same alloy is used as the hydrogen absorbing alloy), the pressure difference between both the tanks becomes small, and the transfer speed becomes low. FIG. 22 is a diagram illustrating the relationship between the tank pressure and the amount of stored hydrogen in each case where the same alloy (alloy B) is used. In this case, since the pressure difference between both the tanks becomes small, a large amount of energy is required to obtain a high hydrogen transfer rate.

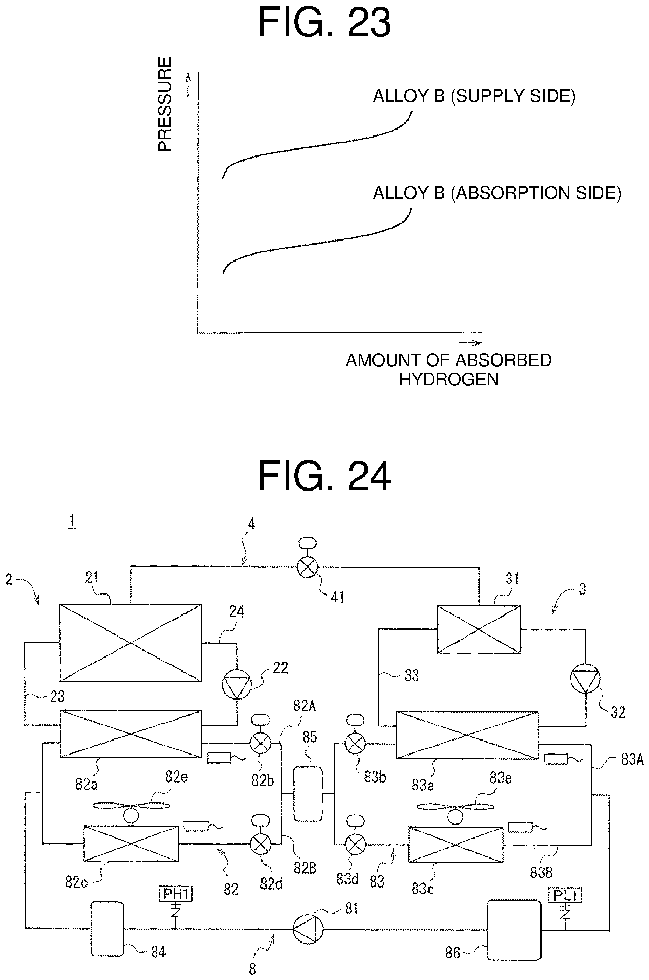

In the following embodiment, a condenser of a heat pump unit (a double bundle type heat pump unit) is used as a heating source, and an evaporator is used as a cooling source, so that a large pressure difference between both tanks is obtained with small energy, and a high transfer speed is obtained. That is, the heating device and the cooling device are configured by a heat pump unit, and the difference between the temperature of the hydrogen supply side tank 21 and the temperature of the hydrogen absorption side tank 31 is controlled to be a predetermined temperature difference by controlling the amount of medium circulation in the heat pump unit. FIG. 23 is a diagram illustrating the relationship between the tank pressure and the amount of stored hydrogen in this case, and a high hydrogen transfer rate can be obtained with small energy.

### - Thirteenth embodiment -

FIG. 24 is a diagram illustrating an outline of a circuit configuration of the system filled with hydrogen absorbing alloy 1 according to the present embodiment. As illustrated in this FIG. 24, the system filled with hydrogen absorbing alloy 1 according to the present embodiment has a configuration in which a heat pump unit 8 is included instead of the supply side secondary medium circuit 5 and the absorption side secondary medium circuit 6 in the above described fifth to twelfth embodiments. Although a temperature sensor and a pressure sensor are illustrated in each unit in FIG. 24, the respective sensors are known, and thus the description thereof will be omitted here. Although the respective sensors are omitted in the drawings of the other embodiments, the respective sensors are provided as in FIG. 24.

The supply side medium circuit 2 in the present embodiment comprises, in the supply side first pipe 23, a main-condenser 82a that exchanges heat between the medium circulating in the supply side medium circuit 2 and the medium circulating in the heat pump unit 8.

The absorption side medium circuit 3 in the present embodiment comprises, in the absorption side first pipe 33, a main-evaporator 83a that exchanges heat between the medium circulating in the absorption side medium circuit 3 and the medium circulating in the heat pump unit 8.

The heat pump unit 8 has a configuration in which a compressor 81, a condenser circuit 82, and an evaporator circuit 83 are connected to each other by pipes.

The condenser circuit 82 is provided on the discharge side of the compressor 81, and comprises a main-condenser circuit 82A and a sub-condenser circuit 82B through which the refrigerant having passed through the oil separator 84 flows. The main-condenser circuit 82A comprises a main-condenser 82a and a solenoid valve 82b. The sub-condenser circuit 82B comprises a sub-condenser (sub-heater/cooler) 82c and a solenoid valve 82d. The opening degree of each of the solenoid valves 82b and 82d can be adjusted, and the flow rate of the media flowing through the main-condenser circuit 82A and the flow rate of the media flowing through the sub-condenser circuit 82B can be adjusted. The sub-condenser 82c is provided with a fan 82e, and the heat radiation amount in the sub-condenser 82c can be adjusted by controlling the rotation number of the fan 82e.

The evaporator circuit 83 is connected to the condenser circuit 82 via the receiver 85, and comprises a main-evaporator circuit 83A and a sub-evaporator circuit 83B. The main-evaporator circuit 83A comprises a solenoid valve 83b and a main-evaporator 83a. The sub-evaporator circuit 83B comprises a solenoid valve 83d and a sub-evaporator (sub-heater/cooler) 83c. The opening degree of each of the solenoid valves 83b and 83d can be adjusted, and the flow rate of the refrigerant flowing through the main-evaporator circuit 83A and the flow rate of the refrigerant flowing through the sub-evaporator circuit 83B can be adjusted. The sub-evaporator 83c is provided with a fan 83e, and the heat absorption amount in the sub-evaporator 83c can be adjusted by controlling the rotation number of the fan 83e. An accumulator 86 is provided between the evaporator circuit 83 and the suction side of the compressor 81.

Generally, in the heat pump unit 8, the heat radiation amount on the heating side (heat radiation side) is larger than the amount of heat absorbed on the cooling side (heat absorption side) (for example, the ratio of the amounts of heat for heating and cooling is 4:3). That is, in the case of a configuration in which the entire heat radiation amount of the condenser is simply given to the hydrogen supply side tank 21 and the entire heat absorption amount of the evaporator is simply taken from the hydrogen absorption side tank 31, the heating load for the hydrogen supply side tank 21 becomes larger than the cooling load for the hydrogen absorption side tank 31, and a heat imbalance occurs.

Considering this point, in the present embodiment, the heat imbalance is suppressed or eliminated by adjusting the heat radiation amount in the sub-condenser 82c and the amount of heat absorbed in the sub-evaporator 83c.

Specifically, the opening degree of the solenoid valve 82d and the rotation number of the fan 82e are controlled such that the heat radiation amount in the sub-condenser 82c is larger than the amount of heat absorbed in the sub-evaporator 83c, and the heat radiation amount in the main-condenser 82a and the amount of heat absorbed in the main-evaporator 83a are balanced. Specifically, since the ratio of the amounts of heat on the heating side and the cooling side is 4:3 in the heat pump unit 8 as described above, the surplus heat radiation amount is radiated from the sub-condenser 82c (the amount of heat corresponding to 1/3 of the amount of heat on the heating side is radiated) such that the ratio of the amount of heat radiated in the main-condenser 82a to the amount of heat absorbed in the main-evaporator 83a is 3:3. The control of the opening degree of each of the solenoid valves 82b, 82d, 83b, and 83d and the rotation number of each of the fans 82e and 83e is performed based on detection values of a temperature sensor and a pressure sensor provided in respective parts of the heat pump unit 8. Thus, the difference between the temperature of the hydrogen supply side tank 21 and the temperature of the hydrogen absorption side tank 31 can be set to a predetermined temperature difference.

Thus, a high hydrogen transfer rate can be obtained with small energy. Also, it is possible to stably transfer hydrogen from the hydrogen supply side tank 21 to the hydrogen absorption side tank 31 while suppressing the internal pressure of the hydrogen supply side tank 21 from becoming too high.

In each of the following embodiments, in the system filled with hydrogen absorbing alloy 1 in the thirteenth embodiment, when the pressure of the medium in the heat pump unit 8 becomes higher than a predetermined value, the heating load of the sub-heater/cooler is decreased or the cooling load of the sub-heater/cooler is increased; when the pressure of the medium in the heat pump unit 8 becomes lower than a predetermined value, the heating load of the sub-heater/cooler is decreased or the cooling load of the sub-heater/cooler is increased; when the pressure of hydrogen in the hydrogen transfer pathway 4 becomes higher than a predetermined value, the heating load of the sub-heater/cooler is decreased or the cooling load of the sub-heater/cooler is increased; or when the pressure of hydrogen in the hydrogen transfer pathway 4 becomes lower than a predetermined value, the heating load of the sub-heater/cooler is increased or the cooling load of the sub-heater/cooler is decreased. These will be described in detail below.

### - Fourteenth embodiment -

At next, descriptions will be made on the fourteenth embodiment according to the present invention. The present embodiment relates to control for eliminating a state where the high pressure in the heat pump unit 8 becomes too high.

Specifically, in this embodiment, when the high pressure (the pressure of the refrigerant) in the heat pump unit 8 reaches a predetermined high pressure limit value, control of increasing the opening degree of the solenoid valve 82d included in the sub-condenser circuit 82B is performed. That is, by temporarily increasing the opening degree of the solenoid valve 82d, the high pressure in the heat pump unit 8 is released to the low pressure side, and the high pressure is decreased to the high pressure limit value or less. The control of the opening degree of this solenoid valve 82d is performed by transmitting a command signal from a valve controller (not illustrated) on the condition that the pressure detected by a pressure sensor provided in the condenser circuit 82 reaches a high pressure limit value.

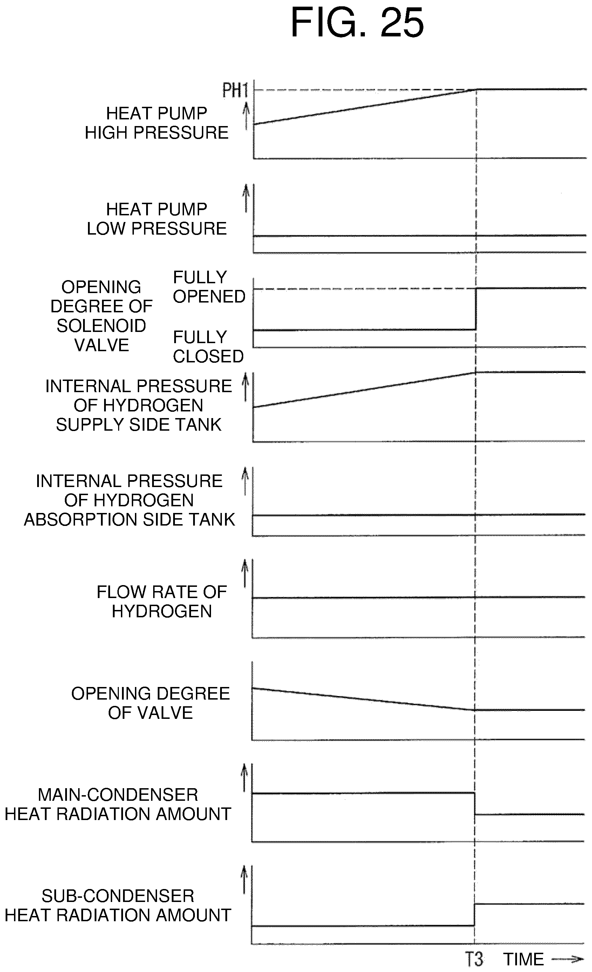

FIG. 25 is a diagram illustrating an example of the change of the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the heat radiation amount of the main-condenser 82a, and the heat radiation amount of the sub-condenser 82c in this case.

Until the timing T3 in the drawing is reached, the high pressure of the heat pump unit 8 gradually increases, and thus the internal pressure of the hydrogen supply side tank 21 also gradually increases and the opening degree of the flow rate adjusting valve 41 gradually decreases. Then, when the high pressure of the heat pump unit 8 reaches the high pressure limit value PH1 at a timing T3 in the drawing, the opening degree of the solenoid valve 82d is increased (for example, fully opened), and thus the increase in the high pressure of the heat pump unit 8 is stopped. As the heat radiation amount from the sub-condenser 82c increases, the heat radiation amount from the main-condenser 82a decreases, and thus the increase in the internal pressure of the hydrogen supply side tank 21 stops.

Thus, by performing the control of increasing the opening degree of the solenoid valve 82d when the high pressure of the heat pump unit 8 reaches the predetermined high pressure limit value PH1, the internal pressure of the hydrogen supply side tank 21 can be prevented from becoming too high.

### - Fifteenth embodiment -

At next, descriptions will be made on the fifteenth embodiment according to the present invention. The present embodiment relates to control for eliminating a state where the internal pressure of the hydrogen supply side tank 21 becomes too high.

Specifically, in this embodiment, when the internal pressure of the hydrogen supply side tank 21 reaches a predetermined high pressure limit value, control of increasing the opening degree of the solenoid valve 82b provided in the solenoid valve 82d is performed. That is, by temporarily increasing the opening degree of the solenoid valve 82d, the flow rate of the refrigerant in the main-condenser 82a is decreased to reduce the heating load applied to the hydrogen supply side tank 21, thereby suppressing an increase in the internal pressure of the hydrogen supply side tank 21. The control of the opening degree of this solenoid valve 82d is performed by transmitting a command signal from a valve controller (not illustrated) on the condition that the pressure detected by a pressure sensor (not illustrated) provided on the upstream side of the flow rate adjusting valve 41 in the hydrogen transfer pathway 4 reaches a high pressure limit value.

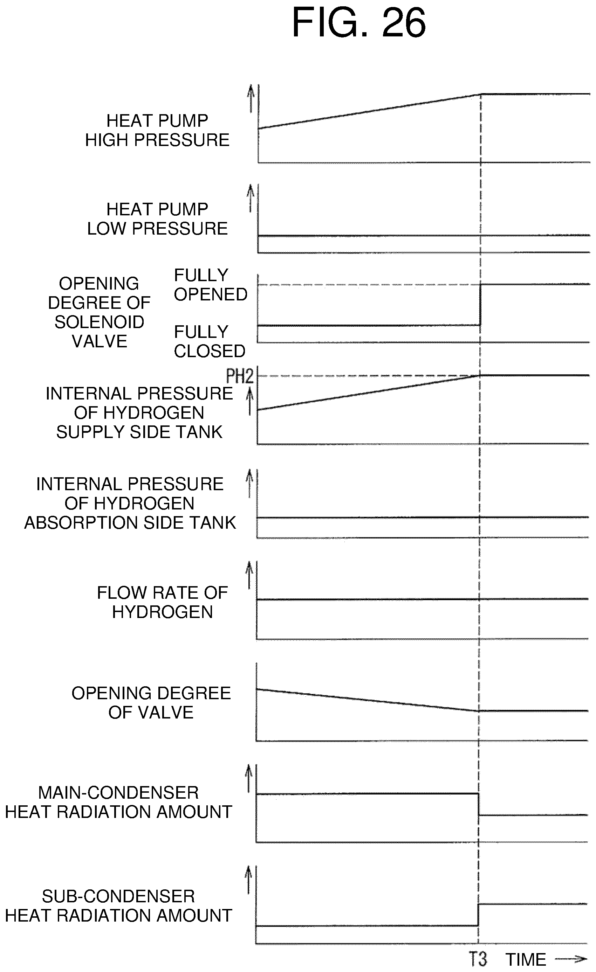

FIG. 26 is a diagram illustrating an example of change of the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the heat radiation amount of the main-condenser 82a, and the heat radiation amount of the sub-condenser 82c in this case.

Until the timing T3 in the drawing is reached, the internal pressure of the hydrogen supply side tank 21 gradually increases, and thus the high pressure in the heat pump unit 8 also gradually increases and the opening degree of the flow rate adjusting valve 41 gradually decreases. Then, at a timing T3 in the drawing, when the internal pressure of the hydrogen supply side tank 21 reaches a predetermined high pressure limit value PH2, the opening degree of the solenoid valve 82d is increased (for example, fully opened), and thus the increase in the internal pressure of the hydrogen supply side tank 21 is stopped. The increase in the high pressure in the heat pump unit 8 is also stopped.

Thus, by performing the control to increase the opening degree of the solenoid valve 82d when the internal pressure of the hydrogen supply side tank 21 reaches the predetermined high pressure limit value PH2, the internal pressure of the hydrogen supply side tank 21 can be prevented from becoming too high.

### - Sixteenth embodiment -

At next, descriptions will be made on the sixteenth embodiment according to the present invention. The present embodiment relates to control for eliminating a state where the low pressure in the heat pump unit 8 becomes too low. An example of the reason why the low pressure in this heat pump unit 8 becomes too low is that the heat capacity of the hydrogen absorption side tank 31 is smaller than the heat capacity of the hydrogen supply side tank 21.

Specifically, in this embodiment, when the low pressure (the pressure of the refrigerant) in the heat pump unit 8 reaches a predetermined low pressure limit value, control of increasing the opening degree of the solenoid valve 83d included in the sub-evaporator circuit 83B is performed. That is, the low pressure in the heat pump unit 8 is increased by temporarily increasing the opening degree of the solenoid valve 83d. The control of the opening degree of this solenoid valve 83d is performed by transmitting a command signal from a valve controller (not illustrated) on the condition that the pressure detected by a pressure sensor provided in the evaporator circuit 83 reaches a low pressure limit value.

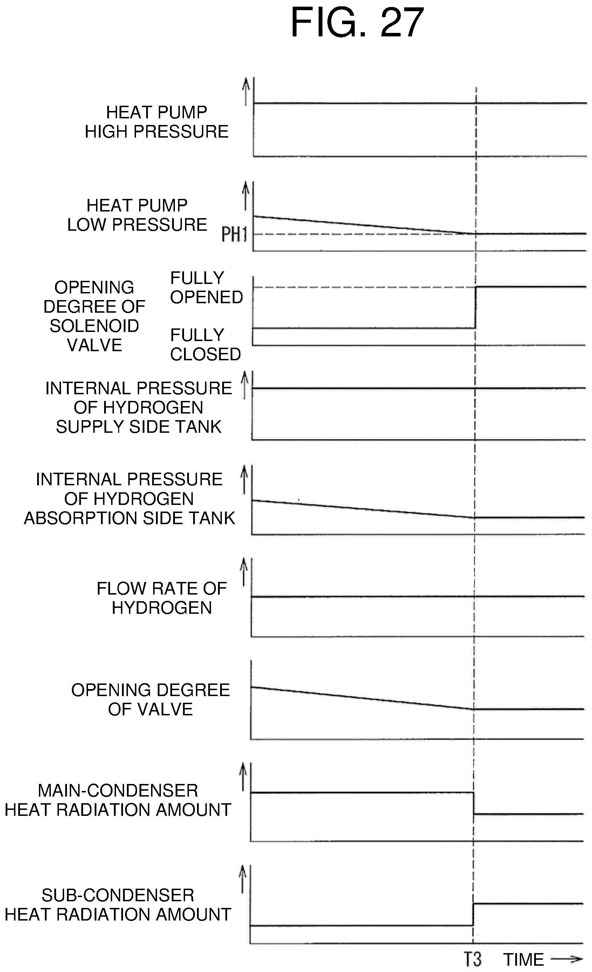

FIG. 27 is a diagram illustrating an example of change of the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the heat radiation amount of the main-condenser 82a, and the heat radiation amount of the sub-condenser 82c in this case.

Until the timing T3 in the drawing is reached, the low pressure of the heat pump unit 8 gradually decreases, and thus the internal pressure of the hydrogen absorption side tank 31 also gradually decreases and the opening degree of the flow rate adjusting valve 41 gradually decreases. Then, when the low pressure of the heat pump unit 8 reaches the low pressure limit value PL1 at the timing T3 in the drawing, the opening degree of the solenoid valve 83d is increased (for example, fully opened), and thus the decrease in the low pressure of the heat pump unit 8 is stopped. As the amount of heat absorbed by the sub-evaporator 83c increases, the amount of heat absorbed by the main-evaporator 83a decreases, and thus the decrease in the internal pressure of the hydrogen absorption side tank 31 stops.

Thus, by performing the control of increasing the opening degree of the solenoid valve 83d when the low pressure of the heat pump unit 8 reaches the predetermined low pressure limit value PL1, the internal pressure of the hydrogen absorption side tank 31 can be prevented from becoming too low.

### - Seventeenth embodiment -

At next, descriptions will be made on the seventeenth embodiment according to the present invention. The present embodiment relates to control for eliminating a state where the internal pressure of the hydrogen absorption side tank 31 becomes too low. An example of the cause of the state where the internal pressure of this hydrogen absorption side tank 31 becomes too low is that the heat capacity of the hydrogen absorption side tank 31 is smaller than the heat capacity of the hydrogen supply side tank 21.

Specifically, in this embodiment, when the internal pressure of the hydrogen absorption side tank 31 reaches a predetermined low pressure limit value, control of increasing the opening degree of the solenoid valve 83d provided in the sub-evaporator circuit 83B is performed. That is, by temporarily increasing the opening degree of the solenoid valve 83d, the flow rate of the refrigerant in the main-evaporator 83a is decreased to reduce the cooling load in the hydrogen absorption side tank 31 to be cooled, thereby suppressing a decrease in the internal pressure of the hydrogen absorption side tank 31. The control of the opening degree of this solenoid valve 83d is performed by transmitting a command signal from a valve controller (not illustrated) on the condition that the pressure detected by a pressure sensor (not illustrated) provided on the downstream side of the flow rate adjusting valve 41 in the hydrogen transfer pathway 4 reaches the low pressure limit value.

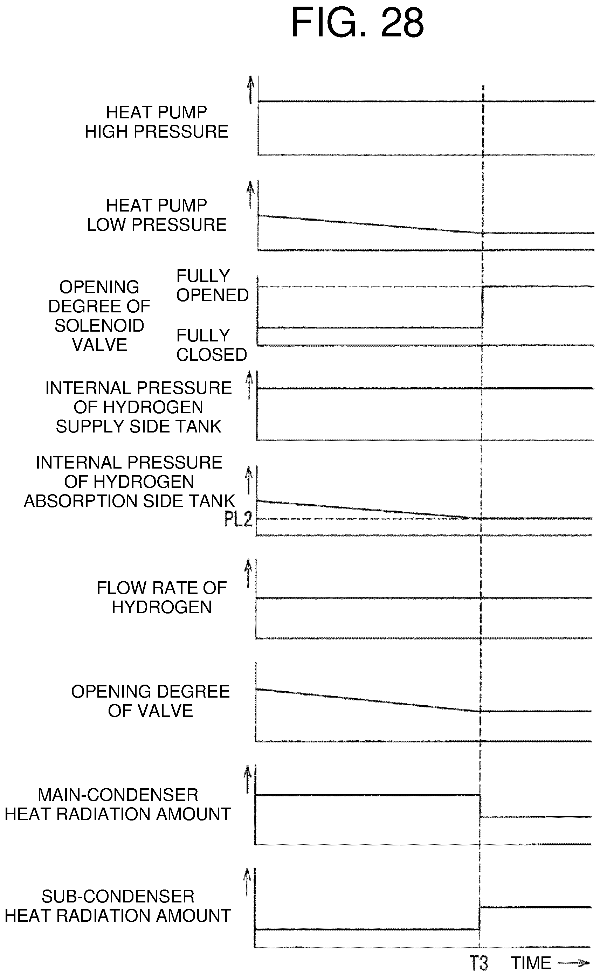

FIG. 28 is a diagram illustrating an example of changes in the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the amount of heat absorbed by the main-evaporator 83a, and the amount of heat absorbed by the sub-evaporator 83c in this case.

Until the timing T3 in the drawing is reached, the internal pressure of the hydrogen absorption side tank 31 gradually decreases, and thus the low pressure in the heat pump unit 8 also gradually decreases and the opening degree of the flow rate adjusting valve 41 gradually decreases. Then, at a timing T3 in the drawing, when the internal pressure of the hydrogen absorption side tank 31 reaches a predetermined low pressure limit value PL2, the opening degree of the solenoid valve 83d is increased (for example, fully opened), and thus the decrease in the internal pressure of the hydrogen absorption side tank 31 is stopped. The decrease in the low pressure in the heat pump unit 8 is also stopped.

Thus, by performing the control of increasing the opening degree of the solenoid valve 83d when the internal pressure of the hydrogen absorption side tank 31 reaches the predetermined low pressure limit value PL2, the internal pressure of the hydrogen absorption side tank 31 can be prevented from becoming too high.

### - Eighteenth embodiment -

At next, descriptions will be made on the eighteenth embodiment according to the present invention. The present embodiment relates to control for eliminating a state where the internal pressure of the hydrogen supply side tank 21 becomes too high.

Specifically, in this embodiment, when the internal pressure of the hydrogen supply side tank 21 reaches a predetermined high pressure limit value (in the present invention, when the pressure of hydrogen in the hydrogen transfer pathway becomes higher than a first hydrogen pressure threshold value), the control of increasing the opening degree of the flow rate adjusting valve 41 is performed. That is, by canceling the function of maintaining the hydrogen flow rate constant by the flow rate adjusting valve 41, and by temporarily increasing the opening degree of the flow rate adjusting valve 41, the pressure of the hydrogen supply side tank 21 is released from the hydrogen transfer pathway 4 to the hydrogen absorption side tank 31, and the internal pressure of the hydrogen supply side tank 21 is decreased to the high pressure limit value or less. The control of the opening degree of this flow rate adjusting valve 41 is performed by transmitting a command signal from a valve controller on the condition that the pressure detected by a pressure sensor (not illustrated) provided on the upstream side of the flow rate adjusting valve 41 in the hydrogen transfer pathway 4 reaches a high pressure limit value.

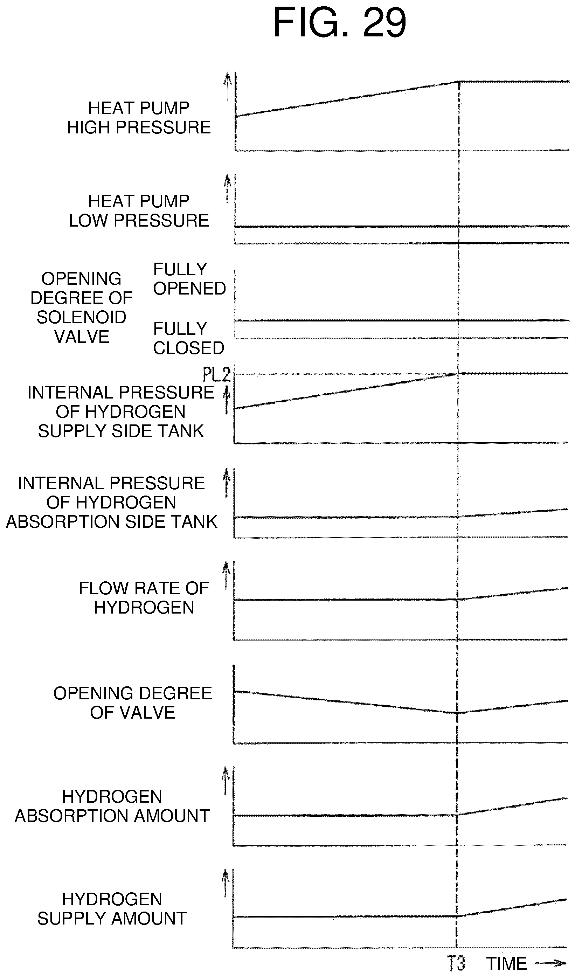

FIG. 29 is a diagram illustrating an example of the change of the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the heat radiation amount of the main-condenser 82a, and the heat radiation amount of the sub-condenser 82c in this case.

Until the timing T3 in the drawing is reached, the internal pressure of the hydrogen supply side tank 21 gradually increases, and thus the high pressure in the heat pump unit 8 also gradually increases and the opening degree of the flow rate adjusting valve 41 gradually decreases. Then, at a timing T3 in the drawing, when the internal pressure of the hydrogen supply side tank 21 reaches a predetermined high pressure limit value PH2, the opening degree of the flow rate adjusting valve 41 increases, and accordingly, the flow rate of hydrogen in the hydrogen transfer pathway 4 increases, and the increase in the internal pressure of the hydrogen supply side tank 21 stops. The increase in the high pressure in the heat pump unit 8 is also stopped.

Thus, by performing the control of increasing the opening degree of the flow rate adjusting valve 41 when the internal pressure of the hydrogen supply side tank 21 reaches the predetermined high pressure limit value PH2, the internal pressure of the hydrogen supply side tank 21 can be prevented from becoming too high.

### - Nineteenth embodiment -

At next, descriptions will be made on the nineteenth embodiment according to the present invention. The present embodiment relates to control for eliminating a state where the internal pressure of the hydrogen absorption side tank 31 becomes too low.

Specifically, in this embodiment, when the internal pressure of the hydrogen absorption side tank 31 reaches a predetermined low pressure limit value (in the present invention, when the pressure of hydrogen in the hydrogen transfer pathway becomes lower than a second hydrogen pressure threshold value), the control of increasing the opening degree of the flow rate adjusting valve 41 is performed. That is, by canceling the function of maintaining the hydrogen flow rate constant by the flow rate adjusting valve 41, and by temporarily increasing the opening degree of the flow rate adjusting valve 41, the flow rate of hydrogen to the hydrogen absorption side tank 31 is increased, thereby increasing the internal pressure of the hydrogen absorption side tank 31 to the low pressure limit value or more. This control of the opening degree of this flow rate adjusting valve 41 is performed by transmitting a command signal from a valve controller (not illustrated) on the condition that the pressure detected by a pressure sensor (not illustrated) provided on the downstream side of the flow rate adjusting valve 41 in the hydrogen transfer pathway 4 reaches a low pressure limit value.

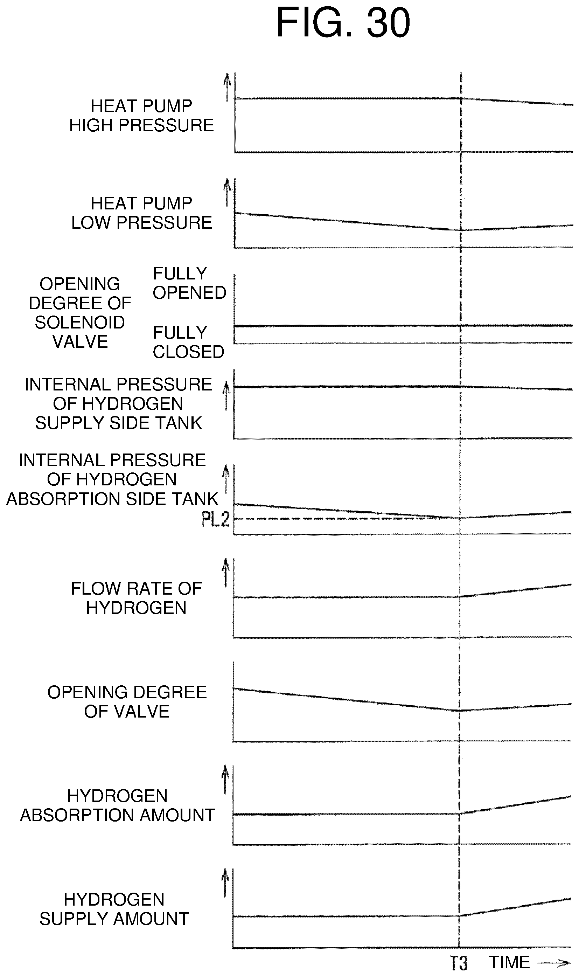

FIG. 30 is a diagram illustrating an example of changes in the high pressure of the heat pump unit 8, the low pressure of the heat pump unit 8, the opening degree of the solenoid valve 82d, the internal pressure of the hydrogen supply side tank 21, the internal pressure of the hydrogen absorption side tank 31, the flow rate of hydrogen in the hydrogen transfer pathway 4, the opening degree of the flow rate adjusting valve 41, the amount of heat absorbed by the main-evaporator 83a, and the amount of heat absorbed by the sub-evaporator 83c in this case.

Until the timing T3 in the drawing is reached, the internal pressure of the hydrogen absorption side tank 31 gradually decreases, and thus the low pressure in the heat pump unit 8 also gradually decreases and the opening degree of the flow rate adjusting valve 41 gradually decreases. Then, at timing T3 in the drawing, when the internal pressure of the hydrogen absorption side tank 31 reaches a predetermined low pressure limit value PL2, the opening degree of the flow rate adjusting valve 41 is increased, and thus the decrease in the internal pressure of the hydrogen absorption side tank 31 is stopped. The decrease in the low pressure in the heat pump unit 8 is also stopped.

Thus, by performing the control of increasing the opening degree of the flow rate adjusting valve 41 when the internal pressure of the hydrogen absorption side tank 31 reaches the predetermined low pressure limit value PL2, the internal pressure of the hydrogen absorption side tank 31 can be prevented from becoming too high.

### - Twentieth embodiment -

At next, descriptions will be made on the Twentieth embodiment according to the present invention. In the present embodiment, when the pressure of the medium of the heat pump unit 8 becomes higher than a predetermined value (the first medium pressure threshold value in the present invention), the rotation number of the compressor 81 is temporarily decreased to reduce the circulation amount of the medium, thereby reducing the heating load for the hydrogen supply side tank 21 and suppressing the pressure rise of the hydrogen supply side tank 21.

Also, as a modification example of the twentieth embodiment, when the pressure of the medium of the heat pump unit 8 becomes lower than a predetermined value (the second medium pressure threshold value in the present invention), the rotation number of the compressor 81 may be temporarily decreased to reduce the circulation amount of the medium, thereby reducing the cooling load for the hydrogen absorption side tank 31 and suppressing the pressure drop of the hydrogen absorption side tank 31.

### - Other embodiments -

The present invention is not limited to the above described embodiments and the above described modification examples, and all modifications and applications included in the scope of the claims and the scope equivalent to the scope of the claims are possible.

For example, the configurations of the respective embodiments and the respective modified examples may be combined with each other. That is, in each of the above described embodiments, only one of the heating load by the heating device (for example, the supply side medium circuit 2 in the first embodiment) and the cooling load by the cooling device (for example, the absorption side medium circuit 3 in the first embodiment) is controlled, but both the heating load by the heating device and the cooling load by the cooling device may be simultaneously controlled such that the heating load and the cooling load are in a predetermined ratio. Also, in any of the embodiments, when the heating load for the hydrogen supply side tank 21 in the supply side medium circuit 2 is larger than the cooling load for the hydrogen absorption side tank 31 in the absorption side medium circuit 3, the hydrogen absorption side tank 31 may be cooled, the hydrogen supply side tank 21 may be cooled, or both of them may be performed. Similarly, when the cooling load of the hydrogen absorption side tank 31 in the absorption side medium circuit 3 is larger than the heating load of the hydrogen supply side tank 21 in the supply side medium circuit 2, the hydrogen absorption side tank 31 may be heated, the hydrogen supply side tank 21 may be heated, or both the heating of the hydrogen absorption side tank 31 and the heating of the hydrogen supply side tank 21 may be performed.

### INDUSTRIAL APPLICABILITY

The present invention is applicable to a system filled with hydrogen absorbing alloy that transfers hydrogen from a hydrogen supply side tank to a hydrogen absorption side tank.

### REFERENCE SIGNS LIST

1 SYSTEM FILLED WITH HYDROGEN ABSORBING ALLOY
2 SUPPLY SIDE MEDIUM CIRCUIT (HEATING DEVICE, PRIMARY HEAT MEDIUM PATHWAY)
21 HYDROGEN SUPPLY SIDE TANK
25 HEATING TOOL
26 HEATER (SUB-HEATER/COOLER)
27 COOLER (SUB-HEATER/COOLER)
3 ABSORPTION SIDE MEDIUM CIRCUIT (COOLING DEVICE, PRIMARY REFRIGERANT PATHWAY)
31 HYDROGEN ABSORPTION SIDE TANK
35 COOLING TOOL
36 COOLER (SUB-HEATER/COOLER)
37 HEATER (SUB-HEATER/COOLER)
4 HYDROGEN TRANSFER PATHWAY
41 FLOW RATE ADJUSTING VALVE
5 SUPPLY SIDE SECONDARY MEDIUM CIRCUIT (SECONDARY HEAT MEDIUM PATHWAY)
51 SUPPLY SIDE HEAT EXCHANGER (FIRST HEAT EXCHANGER)
56 HEATER (SUB-HEATER/COOLER)
57 COOLER (SUB-HEATER/COOLER)
59 HEAT EXCHANGER (SUB-HEATER/COOLER)
6 ABSORPTION SIDE SECONDARY MEDIUM CIRCUIT (SECONDARY REFRIGERANT PATHWAY)
61 ABSORPTION SIDE HEAT EXCHANGER (SECOND HEAT EXCHANGER)
66 COOLER (SUB-HEATER/COOLER)
67 HEATER (SUB-HEATER/COOLER)
8 HEAT PUMP UNIT
82C SUB-CONDENSER (SUB-HEATER/COOLER)
83C SUB-EVAPORATOR (SUB-HEATER/COOLER)

## Claims

1. A system filled with hydrogen absorbing alloy in which a hydrogen supply side tank containing a hydrogen absorbing alloy and a hydrogen absorption side tank containing a hydrogen absorbing alloy are connected to each other via a hydrogen transfer pathway, and hydrogen is transferred from the hydrogen supply side tank to the hydrogen absorption side tank, the system filled with hydrogen absorbing alloy comprising:
a heating device that heats the hydrogen supply side tank; and
a cooling device that cools the hydrogen absorption side tank,
wherein a configuration in which at least one of a heating load by the heating device and a cooling load by the cooling device can be controlled such that the heating load and the cooling load are in a predetermined ratio.

2. The system filled with hydrogen absorbing alloy according to claim 1, comprising
a sub-heater/cooler that increases or decreases a heating load in the heating device and/or increases or decreases a cooling load in the cooling device.

3. The system filled with hydrogen absorbing alloy according to claim 1 or 2, wherein
the heating device includes a primary heat medium pathway that heats the hydrogen supply side tank with a primary heat medium, a secondary heat medium pathway through which a secondary heat medium that gives heat to the primary heat medium flows, and a first heat exchanger that exchanges heat between the primary heat medium and the secondary heat medium.

4. The system filled with hydrogen absorbing alloy according to claim 1 or 2, wherein
the cooling device includes a primary refrigerant pathway that cools the hydrogen absorption side tank with a primary refrigerant, a secondary refrigerant pathway through which a secondary refrigerant that takes heat from the primary refrigerant flows, and a second heat exchanger that exchanges heat between the primary refrigerant and the secondary refrigerant.

5. The system filled with hydrogen absorbing alloy according to claim 2, wherein
the heating device includes a primary heat medium pathway that heats the hydrogen supply side tank with a primary heat medium, a secondary heat medium pathway through which a secondary heat medium that gives heat to the primary heat medium flows, and a first heat exchanger in which the primary heat medium and the secondary heat medium exchange heat, and
the sub-heater/cooler is provided in the primary heat medium pathway and/or the secondary heat medium pathway.

6. The system filled with hydrogen absorbing alloy according to claim 2, wherein
the cooling device includes a primary refrigerant pathway that cools the hydrogen absorption side tank with a primary refrigerant, a secondary refrigerant pathway through which a secondary refrigerant that takes heat from the primary refrigerant flows, and a second heat exchanger in which the primary refrigerant and the secondary refrigerant exchange heat, and
the sub-heater/cooler is provided in the primary refrigerant pathway and/or the secondary refrigerant pathway.

7. The system filled with hydrogen absorbing alloy according to claim 1 or 2, wherein
the hydrogen transfer pathway is provided with a flow rate adjusting valve.

8. The system filled with hydrogen absorbing alloy according to claim 1, wherein
the heating device and the cooling device are composed of a heat pump unit.

9. The system filled with hydrogen absorbing alloy according to claim 8, wherein
by controlling an amount of medium circulation in the heat pump unit, the difference between a temperature of the hydrogen supply side tank and a temperature of the hydrogen absorption side tank is controlled to be a predetermined temperature difference.

10. The system filled with hydrogen absorbing alloy according to claim 8 or 9, comprising
a sub-heater/cooler that increases or decreases a heating load for the hydrogen supply side tank and/or increases or decreases a cooling load for the hydrogen absorption side tank.

11. The system filled with hydrogen absorbing alloy according to claim 10, wherein
when a pressure of the medium in the heat pump unit becomes higher than a predetermined value, the heating load of the sub-heater/cooler is decreased or the cooling load of the sub-heater/cooler is increased.

12. The system filled with hydrogen absorbing alloy according to claim 10, wherein
when a pressure of the refrigerant in the heat pump unit becomes lower than a predetermined value, the heating load of the sub-heater/cooler is increased or the cooling load of the sub-heater/cooler is decreased.

13. The system filled with hydrogen absorbing alloy according to claim 10, wherein
when a pressure of hydrogen in the hydrogen transfer pathway becomes higher than a predetermined value, the heating load of the sub-heater/cooler is decreased or the cooling load of the sub-heater/cooler is increased.

14. The system filled with hydrogen absorbing alloy according to claim 10, wherein
when a pressure of hydrogen in the hydrogen transfer pathway becomes lower than a predetermined value, the heating load of the sub-heater/cooler is increased or the cooling load of the sub-heater/cooler is decreased.

15. The system filled with hydrogen absorbing alloy according to claim 8, wherein
the hydrogen transfer pathway is provided with a flow rate adjusting valve, and
when a pressure of hydrogen in the hydrogen transfer pathway becomes higher than a first hydrogen pressure threshold value or becomes lower than a second hydrogen pressure threshold value that is lower than the first hydrogen pressure threshold value, opening degree of the flow rate adjusting valve is increased.

16. The system filled with hydrogen absorbing alloy according to claim 8, wherein
when a pressure of the media of the heat pump unit becomes higher than a first media pressure threshold value or becomes lower than a second media pressure threshold value that is lower than the first media pressure threshold value, an amount of medium circulation in the heat pump unit is decreased.
